# EUROPEAN PATENT APPLICATION

(11) **EP 4 700 886 A1**
(43) Date of publication of application: **25.02.2026**
(21) Application number: 24815899.0
(22) Date of filing: 31.05.2024
(51) Int. Cl.: H01M 10/0562, H01M 10/0525

(54) **ORGANIC COATING FOR SULFIDE-CONTAINING SOLID ELECTROLYTE MATERIAL, SOLID ELECTROLYTE, AND SOLID BATTERY COMPRISING SAME**

(30) Priority: 31.05.2023 US 202363505240 P; 10.05.2024 US 202418661381; 30.05.2024 KR 20240070959
(71) Applicant: LG Energy Solution, Ltd., Seoul 07335 (KR); The Regents of the University of California, Oakland, CA 94607-5200 (US)
(72) Inventor: LIU, Ping, San Diego, California 92130 (US); HONG, Junghwa, Newark, California 94560 (US); LIU, Mengchen, San Diego, California 92122 (US); OH, Jeongwoo, Daejeon 34122 (KR); ZHOU, Ke, San Diego, California 92121 (US)
(74) Representative: Hoffmann Eitle
(86) International application number: PCT/KR2024/007448
(87) International publication number: WO 2024/248525

(57) **Abstract**

Disclosed is a coated sulfide-containing solid electrolyte material, as well as a solid electrolyte thereof, and a solid state battery containing a solid electrolyte thereof. According to aspects of the disclosure, the coating is formed on the surface of a sulfide-containing solid electrolyte material, and includes a compound having a thiol with a long hydrophobic tail, *e.g*., such as l-undecanethiol. The coating may provide protection from air and moisture, for instance, under ambient conditions.

## Description

### CROSS-REFERENCE TO RELATED APPLICATION

The present application claims priority to U.S. Provisional Application No. 63/505,240 filed on May 31, 2023, U.S. Patent Application No. 18/661,381 filed on May 10, 2024, and Korean Patent Application No. 10-2024-0070959 filed on May 30, 2024.

### FIELD OF TECHNOLOGY

The present disclosure relates to an organic coating for sulfide-containing solid electrolyte materials, solid electrolytes thereof, and solid state batteries thereof. According to aspects of this disclosure, the organic coating is prepared from a thiol having a hydrophobic chain, which protects the sulfide-containing solid electrolyte material from air and moisture under ambient conditions.

### BACKGROUND

There continues to be an increase in electrified transportation and stationary energy storage systems. Thus, battery technologies for high energy density, which also have improved safety, are becoming more crucial.

Many efforts have focused on the use of lithium metal for the anode. Lithium (Li) metal appears promising to meet the high energy density requirement, as it has a high specific capacity of 3860 mAh g⁻¹ and a low electrochemical potential of -3.040V versus standard hydrogen electrode. However, commercialization using lithium metal anodes with traditional flammable organic liquid electrolytes (OLEs) faces many obstacles, such as the unwanted reaction of lithium metal with OLEs. In addition, there is a safety concern with combustible OLEs.

To avoid safety concerns of conventional lithium ion batteries that use flammable organic electrolyte, all solid state batteries (ASSB) using nonflammable solid electrolytes are being extensively pursued. Solid electrolytes also promise better interfacial stability, opening the door for using lithium metal as the anode, which results in batteries with higher energy densities. Solid electrolytes (SEs) are stable at elevated temperatures, and have improved safety (e.g., may reduce the risk of fires and explosions), and have good ionic conductivity and excellent ductility. In particular, sulfide-containing SEs have been studied due to their high ionic conductivity at room temperature (*e.g*., Li₁₀GeP₂S₁₂ with 12 mS cm⁻¹ and Li_{5.5}PS_{4.5}Cl_{1.5} with 9.4 mS cm⁻¹) which exceed even OLEs. In addition, the flexible nature of sulfide-containing SEs may allow high ductility, which could benefit solid-solid interfaces. As such, it is hoped to use SEs to provide a longer battery lifetime.

However, despite various studies, it is still necessary to overcome certain limitations. For instance, sulfide-containing solid electrolytes suffer from hypersensitivity to moisture, which hampers practical use in manufacturing. The extremely poor air stability has been a major limitation of sulfide-containing SSEs. Hydrolysis generates toxic H₂S gas together with catastrophic loss of ion conductivity.

Due to their low chemical stability, sulfide-containing solid electrolytes are usually handled in inert gloveboxes in an atmosphere with exceptionally low moisture levels (-80°C dew point). However, such moisture levels are expensive to maintain in practical applications and for commercialization.

The poor chemical stability is attributed to their structure, chemical bonding, and nonbridging sulfur units in the glass network of most sulfide electrolyte materials. Glasses with a lower concentration of Li-modifier units are more chemically stable because of the smaller number of nonbridging sulfur bonds, which are susceptible to chemical degradation. Lithium ions form an ionic bond with sulfur, which is generally weaker than the other covalent bonds of the glass network, making lithium ions prone to leach out due to reaction with water. In order to realize sulfide solid electrolytes for all solid state batteries, the chemical stability must be addressed.

Researchers have scrutinized this problem by varied approaches such as (1) adding metal oxides (such as ZnO, Fe₂₃, Bi₂O₃) into sulfide SEs to suppress the H₂S generation by absorbing H₂S, (2) partially substituting S by O to form oxysulfide compounds with improved air stability and wide electrochemical window, (3) hard/soft acid base theory guided chemical doping or substitution, or (4) designing and tuning the nanostructure of materials to protect against moisture and air, *e.g*., through a core-shell coating.

The approaches mentioned above have improved the chemical stability of sulfide solid electrolytes. However, issues still remain. For instance, metals have a large negative Gibbs free energy change (Δ G) for the following reaction MₓO_{y} + H₂S → MₓS_{y}+H₂O, thus absorbing H₂S by bringing about the acid-base rection with H₂S. Although effective for moisture protection, the ionic conductivity decreases as "foreign" non-ionic conducting materials are introduced. For instance, ZnO can absorb H₂S effectively, but also compromises the conductivity.

Substituting hard acid (small, nonpolarizable) P⁵⁺ with the soft acid (large, polarizable) Cu⁺¹⁵, As^{5+ 16}, Sn^{4+ 17} and Sb⁵⁺¹⁸ can alleviate fast acting hydrolysis, as the ions tightly bond to the soft base S²⁻ resisting the attack of the hard base O²⁻. The chemical stability of the electrolyte itself may improve, but often at the expense of the interfacial stability with the lithium metal which jeopardizes the overall effectiveness of the all solid state battery.

Constructing new nanostructures and fine tuning the morphology of sulfide electrolytes may work effectively in a laboratory scale. However, upscaling to a manufacturing level is not only impractical, but there is diminution in the conductivity.

Thus, despite the efforts to improve the chemical stability of sulfide-containing electrolytes, there are many shortcomings, including, for example, in conductivity or interfacial stability. Therefore, there remains a need for improved all solid state batteries.

### DISCLOSURE

### Technical Problem

The present disclosure is directed to providing improved stability to sulfide-containing solid electrolyte materials, solid electrolytes thereof, and solid state batteries thereof. Solid-state electrolytes (SSEs) also hold promise for higher interfacial stability and better mechanical properties to suppress Li dendrite penetration, opening the door to the implementation of lithium metal anodes that enables high cell energy densities.

### Technical Solution

The present disclosure is directed to using an organic coating for a sulfide-containing solid electrolyte suitable for use in a solid state battery, as well as a coated sulfide-containing solid electrolyte and a sulfide-containing solid electrolyte composition. According to the present disclosure, the stability of the sulfide-containing solid electrolyte composition is improved, for instance, with respect to moisture and/or air, and allows for easier processibility under ambient conditions. Additionally, the present disclosure is further directed to providing a solid state battery having good electrical and chemical properties including safety, heat resistant stability, energy density, life characteristics and Coulombic efficiency. It will be readily appreciated that these and other objects and advantages of the present disclosure may be realized by means or methods described in the appended claims and a combination thereof.

Sulfide solid-state electrolytes are promising candidates to realize all solid-state batteries (ASSBs) due to their superior ionic conductivity and excellent ductility. However, their hypersensitivity to moisture requires processing environments that are not compatible with today's lithium-ion battery manufacturing infrastructure. For example, *e.g.,* in lithium argyrodites, the bridging sulfur unites (P-S-P) in the network may react with water, generating OH and SH species, which further react to generate both OH and toxic H₂S gas. During the hydrolysis process, these species can attach the P-S bond, thereby releasing H₂S by forming a P-O bond and breaking up the PS₄³⁻ units that are crucial for high Li ion conductivity.

The moisture sensitivity can result in a catastrophic loss of ionic conductivity, requiring sulfide SSEs to be handled in an inert glove box atmosphere with exceptionally low moisture levels (-80 °C dew point) in academic studies. In an industrial setting, a dry room with a dew point of < -60 °C is necessary, which is significantly more cumbersome and costly than the current infrastructure for lithium-ion battery manufacturing with a dew point of ~ -40 °C.

One aspect described herein relates to a reversible surface modification strategy that enables the processability of sulfide SSEs (e.g., Li₆PS₅Cl) under humid ambient air. This protection mechanism does not significantly alter the ionic conductivity and redox stability of the material, and can also be effective for an extended period of time (e.g., hours to days, or longer). A long chain alkyl thiol, *e.g.,* 1-undecanethiol, was shown to be chemically compatible with the electrolyte with negligible impact on its ion conductivity. Importantly, the thiol modification extends the amount of time that the sulfide SSE can be exposed to air with 33% relative humidity (33% RH) with limited degradation of its structure while retaining a conductivity of above 1 mS cm⁻¹ for up to 2 days, a more than 100x improvement in protection time over competing approaches. Experimental and computational results reveal that the thiol group anchors to the SSE surface, while the hydrophobic hydrocarbon tail provides protection by repelling water. The modified Li₆PS₅Cl SSE maintains its function after exposure to an ambient humidity when implemented in a Li_{0.5}In/LiNi_{0.8}Co_{0.1}Mno_{0.1}O₂ ASSB. The proposed protection strategy based on surface molecular interactions represents a major step forward towards cost-competitive and energy-efficient sulfide SSE manufacturing for ASSB applications.

An aspect of the present disclosure relates to a sulfide-containing solid electrolyte with an organic coating, as well as a solid state battery containing the electrolyte. In certain aspects, the organic coating is a protective agent for the sulfide-containing solid electrolyte under ambient conditions. For instance, the organic coating may provide protection from moisture and/or air.

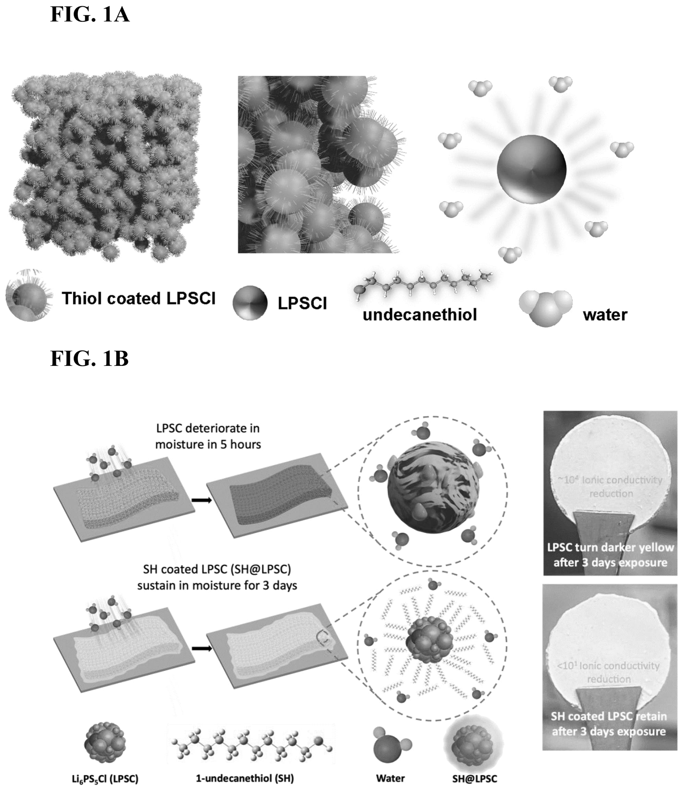

In an aspect of the disclosure, the organic coating is formed from a long chain thiol, which is applied to a sulfide-containing solid electrolyte material, *e.g*., such as Li₆PS₅Cl (LPSCl). The coating has a negligible impact on the ion conductivity of the electrolyte. Some mechanistic studies appear to reveal that the thiol group interacts with the sulfur (of the sulfide-containing solid electrolyte) on the surface, while the hydrocarbon tail provides the protection function. For instance, the hydrocarbon tail may be oriented outward, and form a "lipid barrier" to repel water and other polar substances. As illustrated in FIG. 1, the thiol-coated electrolyte (*e.g*., where the thiol group interacts with the LPSCl surface) provides a hydrophobic tail end, which obstructs water, thus protecting the electrolyte.

In one aspect, the coating extends the time that the electrolyte can be exposed to ambient air with up to 20% humidity for up to 3 days without significant degradation in structure and conductivity. This durability represents more than two orders of magnitude improvement over competing approaches. The coated LPSCl is also shown to maintain its function when implemented in a solid state battery with an oxide cathode. Thus, this protection mechanism based on surface molecular interaction represents a major step towards the application of sulfide electrolytes in solid state batteries for practical applications and commercialization.

An aspect relates to a solid electrolyte composition comprising: a sulfide-containing solid electrolyte material, having a surface where an organic coating on the sulfide-containing solid state electrolyte material is formed. The organic coating is formed on the surface of the sulfide-containing solid state electrolyte material. In some aspects, the coating is formed from at least one compound of Chemical Formula 1 or Chemical Formula 2:

R-A Chemical Formula (1)

R-A'-R Chemical Formula (2)

wherein: A is a SH group, an isocyanate, an amine, or a leaving group (e.g., including but not limited to an organosilicon compound such as a triethoxysilyl or a trimethoxysilyl); A' is a -S- moiety or a -S-S- moiety; and each R is independently a substituted or unsubstituted C3-C20 alkyl group. The solid electrolyte composition can then be used to make a solid electrolyte for a solid state battery.

In an aspect, the organic coating is formed on the surface of the sulfide-containing solid state electrolyte material through adsorption. Thus, in some aspects, the compound of Chemical Formula 1 or Chemical Formula 2 is attached to the surface of the sulfide-containing solid state electrolyte material by a non-covalent attachment, including but not limited to chemisorption, van der Waals interaction, or ionic interaction.

Alternatively, the coating may be formed through the reaction of a compound of Chemical Formula 1 and/or Chemical Formula 2 and the sulfide-containing solid state electrolyte material, *e.g*., a reaction product or the residue of the compound of Chemical Formula 1 and/or Chemical Formula 2 forms the coating. Thus, in some aspects of the disclosure, the compound of Chemical Formula 1 or Chemical Formula 2 reacts with the sulfide-containing solid state electrolyte material to form a covalent bond. In some aspects, the resulting covalent bond is a sulfide bond or a disulfide bond.

In some aspects, in the compound of Chemical Formula 1, A is a thiol group (-SH group), an isocyanate, an amine or a suitable leaving group. In some aspects of the disclosure, the leaving group may be a triethoxysilyl or a trimethoxysilyl.

In an aspect, in the compound of Chemical Formula 1 or Chemical Formula 2, at least one of R is a C6-C16 alkyl group. In an aspect, in the compound of Chemical Formula 1 or Chemical Formula 2, at least one of R is a C8-C12 alkyl group.

In an aspect, the compound of Chemical Formula 1 or Chemical Formula 2 has a total of 6 to 16 carbons. In an aspect, in the compound of Chemical Formula 1 or Chemical Formula 2 has a total of 8 to 12 carbons.

In an aspect, in the compound of Chemical Formula 1 or Chemical Formula 2, at least one of R is a substituted C3-C20 alkyl group, wherein there are one or more substituents selected from fluorine, chlorine, bromine, ester or ketone moieties.

In an aspect, the R group is selected to provide a compound of Chemical Formula 1 or Chemical Formula 2 that is an amphiphilic molecule (e.g., where the R group can repel water and polar organic solvents), and chemically absorb onto the surface of a sulfide solid-state electrolyte. *See, e.g.,* FIGs. 1A and 1B. The headgroup can enable both stabilization of and attachment to the sulfide SSE surface. For instance, when A-thiol head group, it is not expected to displace S atoms in preexisting P-S bonds in the SSE and is expected to attach to surface S atoms via S-S bond formation. A sufficiently long chain alkyl tail (*e.g.,* C₁₁H₂₃-) can ensure high hydrophobicity.

In an aspect, the compound of Chemical Formula 1 is 1-undecanethiol. As discussed below, 1-undecanethiol is chemically compatible with the electrolyte with negligible impact on its ion conductivity. For instance, the thiol modification extended the amount of time that the sulfide SSE could be exposed to air with 33% relative humidity (33% RH) with limited degradation of its structure while retaining a conductivity of above 1 mS cm⁻¹ for up to 2 days, a more than 100x improvement in protection time over competing approaches. Experimental and computational results revealed that the thiol group anchors to the SSE surface, while the hydrophobic hydrocarbon tail provides protection by repelling water. The modified Li₆PS₅Cl SSE maintains its function after exposure to ambient humidity when implemented in a Li_{0.5}In/LiNi_{0.8}Co_{0.1}Mn_{0.1}O₂ ASSB. The proposed protection strategy based on surface molecular interactions represents a major step forward towards cost-competitive and energy-efficient sulfide SSE manufacturing for ASSB applications.

In an aspect, the sulfide-containing solid electrolyte material is selected from the group consisting of an inorganic-based electrolyte material and an organic-based electrolyte material. According to aspects of the disclosure, the sulfide-containing solid electrolyte material is an inorganic electrolyte.

In some aspects of the disclosure, the sulfide-containing solid electrolyte comprises at least one selected from Li₃P₇S₁₁, Li₁₀GeP₂Si₂, and Na₃PS₄ and/or Li₆PS₅Cl. Among SSE materials, sulfides such as Li_{9.6}P₃S₁₂, Li₁₀GeP₂Si₂, and Li_{9.54}Si_{1.74}P_{1.44}S_{11.7}Cl_{0.3} are particularly attractive due to their superionic conductivities (as high as ~10⁻² S cm⁻¹) and deformability. Sulfide SSEs also exhibit lower Young's modulus values than oxide glasses and ceramics, which is beneficial for producing favorable interfacial contacts with electrode materials by mechanical compression.

In some aspects of the disclosure, the sulfide-containing solid electrolyte comprises at least one selected from LPS-based glass or glass ceramic of formula xLi₂S.yP₂S₅, wherein x+y=1.

In some aspects of the disclosure, the sulfide-containing solid electrolyte comprises an argyrodite-based solid electrolyte of formula Li₆PS₅X, wherein X is Cl, Br, or I.

In some aspects of the disclosure, the sulfide-containing solid electrolyte comprises an argyrodite-based solid electrolyte of formula Li_{6-y}PS_{5-y}Cl_{1+y}, where y is <1.

In another aspect, the disclosure relates to a method for making the solid electrolyte composition, comprising: providing a sulfide-containing solid electrolyte material, and combining at least one compound of Chemical Formula 1 or Chemical Formula 2 as described herein to form a coated sulfide-containing solid electrolyte material.

In another aspect, the disclosure relates to a method for making a solid electrolyte, comprising providing a sulfide-containing solid electrolyte, and combining the solid electrolyte with at least one compound of Chemical Formula 1 or Chemical Formula 2 as described herein to form a coated sulfide-containing solid electrolyte material.

Another aspect relates to a solid electrolyte comprising the solid electrolyte composition as above.

Another aspect relates to an all solid state battery comprising: a negative electrode, a positive electrode; and a solid electrolyte as described herein, wherein the solid electrolyte is interposed between the negative electrode and the positive electrode.

### Advantageous Effects

The sulfur-containing solid electrolyte composition, as well as a solid electrolyte and solid state battery thereof is described herein, which uses an organic coating for protection of the sulfide-containing electrolyte from air and/or moisture.

For instance, an organic coating of a long chain alkyl thiol (e.g., such as 1-undecanethiol) that is chemisorbed to the sulfide electrolyte surface protects the material against moisture and air. In FIG. 1, the 1-undecanethiol may be adsorbed onto the surface of Li₆PS₅Cl and attached, for instance, via weak Van der Waals forces. The hydrophilic functional thiol group interacts with Li₆PS₅Cl forming a weak bond, while the hydrophobic carbon tail acts as a shield pushing the water away. The noninvasive 1-undecanethiol coating was demonstrated to protect Li₆PS₅Cl against moisture and air without compromising the conductivity of Li₆PS₅Cl. The integrity of crystal and bonding structures were confirmed by x-ray powder diffraction (XRD), Raman spectroscopy and x-ray photoelectron spectroscopy (XPS), as described in more detail herein.

The coated solid electrolyte material, after exposure to air or moisture, was shown to maintain its performance in both lithium symmetric cells and full cells. The inventors have found that a coating formed from, for example, a long chain alkyl thiol, protects sulfide solid electrolytes from air or moisture, paving the way for large scale manufacturing even under ambient conditions.

According to the disclosure, a sulfide-containing solid electrolyte material (e.g., such as LPSC) can now be openly used for extended periods of time under ambient conditions, which greatly simplifies manufacturing processes and facilitates commercialization.

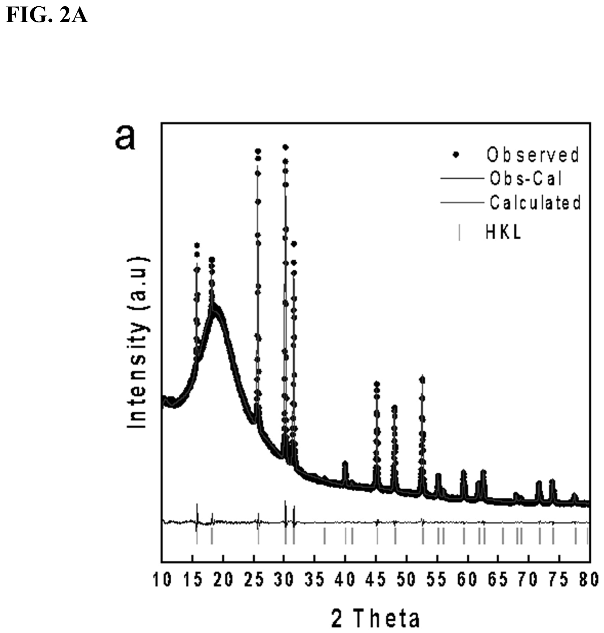

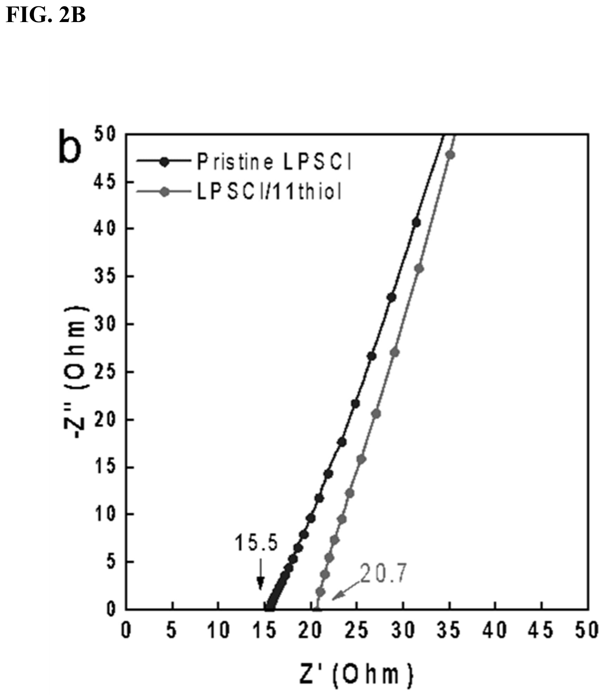

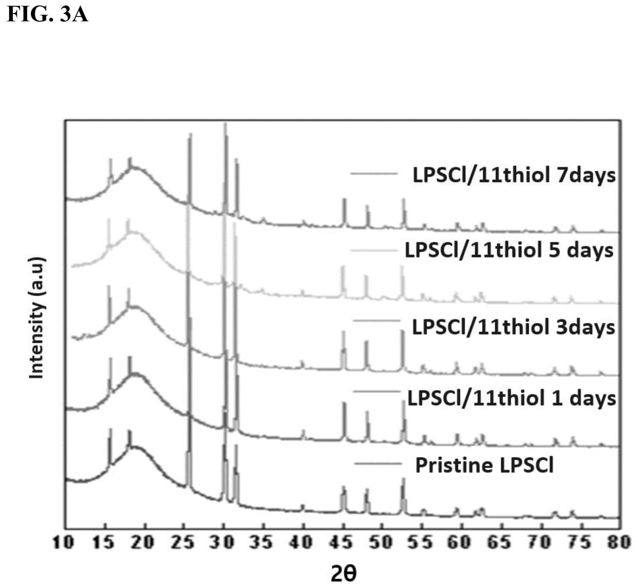

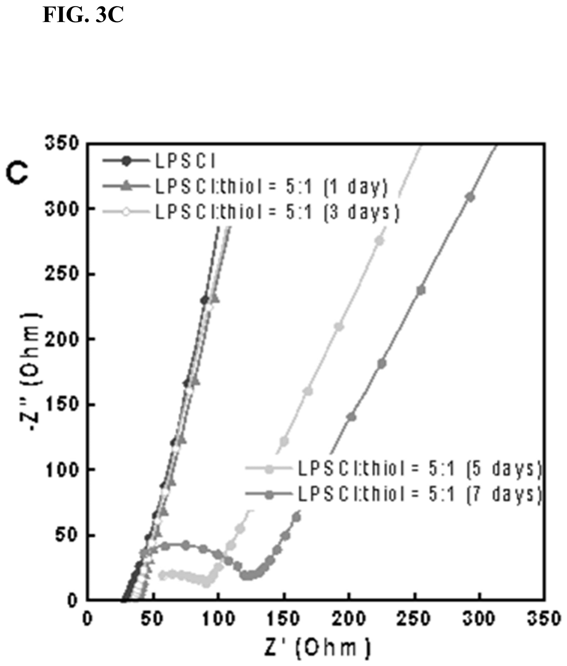

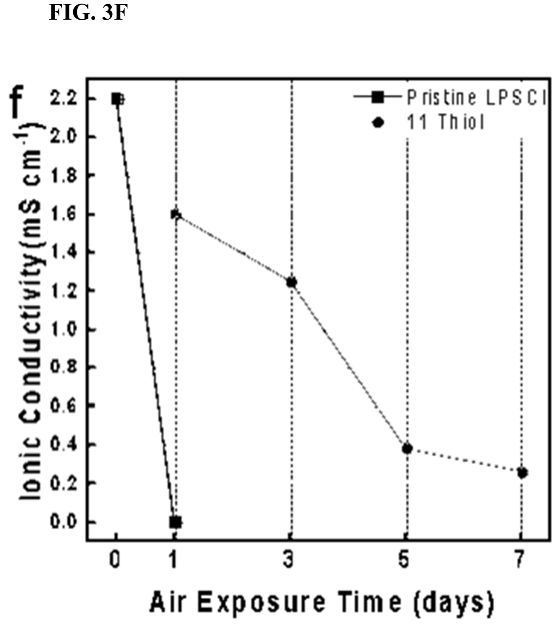

For instance, in one aspect, 1-undecanethiol coated LPSC was evaluated after exposure to ambient air up to 7 days. The evolution of the material after air exposure was observed through XRD, Raman Spectroscopy, and XPS. It was found that the 1-undecanethiol was able to protect LPSC from ambient air for up to 3 days with minimal loss of conductivity. The XRD results (FIGs. 2a and 3a) show that with up to 3 days of air exposure, there was no sign of new phases forming and the integrity of the original structure of LPSC remains unchanged, indicating the 1-undecanethiol has functioned successfully as a protecting agent. At the 5 day air exposure mark, small secondary phase peaks appeared. By 7 days, although the main LPSC peaks remain, the impurity peaks were more apparent.

### BRIEF DESCRIPTION OF THE DRAWINGS

The accompanying drawings illustrate aspects of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIG. 1A is a schematic of an organic compound (1-undecanethiol) coated on LPSC to form a thiol-coated LPSC for moisture protection. FIG. 1B is a schematic illustration of the protection strategy for LPSC in humid ambient air. While LPSC undergoes hydrolysis and suffers a 10⁴x reduction in ionic conductivity, 1-undecanethiol (SH) adsorbed onto the LPSC surface protects the material, which loses less than10x in conductivity in 33% relative humidity (RH). SH forms a hydrophobic shield around the LPSC particles.
FIG. 2A shows a PXRD refinement of 1-undecanethiol (or "11Thiol") mixed with LPSC after vacuum drying.
FIG. 2B shows the electrochemical impedance spectroscopy results for LPSC and the LPSC/11Thiol mixture.
FIG. 3A shows the PXRD results on 1-undecanethiol coated LPSC for the and air exposure times noted, studying the structural evolution 1-undecanethiol mixed with LPSC from 1 day to 7 days.
FIG. 3B shows the Raman Spectroscopy of pristine LPSC and LPSC/1-undecanethiol mixture after 1 day to 7 day air exposure.
FIG. 3C shows the Electrochemical impedance spectroscopy results for LPSC and the LPSC/1-undecanethiol mixture from day 1 day to 7 days exposure to air.
FIG. 3D and FIG. 3E show the XPS results for LPSC and the LPSC/1-undecanethiol mixture from day 1 day to 7 days exposure to air.
FIG. 3F shows the ionic conductivity results for pristine LPSC and the LPSC/1-undecanethiol mixture from day 1 day to 7 days exposure to air.
FIG. 3G shows Electrochemical Impedance Spectroscopy results comparing pristine LPSC and 1-undecanethiol coated LPSC after 1 day air exposure.
FIG. 4A shows the ³¹P spin echo ss-NMR spectra collected on pristine LPSC, and on pure and 1-undecanethiol (thiol) coated LPSC samples exposed to ambient air for various amounts of time. The 'wet' and 'dry' samples refer to LPSC samples exposed to the 1-undecanethiol solution (wet), and subsequently dried (dry).

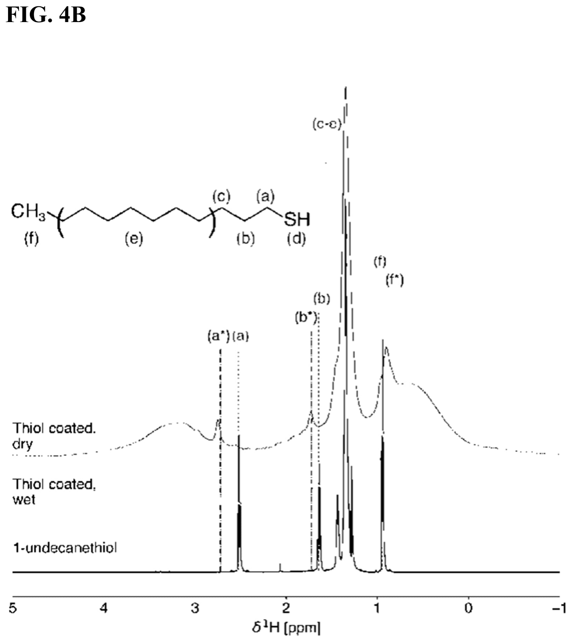

FIG. 4B shows ¹H spin echo NMR spectra collected on a pure 1-undecanethiol solution, the wet coated LPSC, and on the subsequently dried LPSC sample. ¹H resonances in the 1-undecanethiol spectrum and their corresponding positions in the molecule are labeled (a-f) in the upper left corner. Resonances from the pure 1-undecanethiol that shift in the coated samples have their original positions indicated with a red dashed line and their final positions are marked with a black dashed line and an asterisked letter label. For both panels, spectra are scaled to all have the same maximum intensity. All spectra were obtained at 18.8 T under 60 kHz magic angle spinning (MAS).

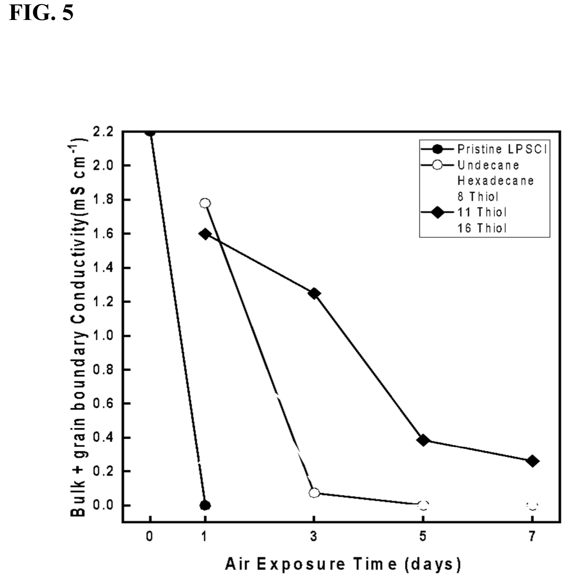

FIG. 5 shows the bulk and grain boundary conductivity results for LPSC and the LPSC/1-undecanethiol mixture from day 1 day to 7 days exposure to air.
FIG. 6A shows the symmetrical cycling tests for pristine LPSC cycles under 0.1mA/cm² for 15hrs.
FIG. 6B shows the symmetrical cycling tests for the LPSC/1-undecanethiol mixture under 0.1mA/cm² for 15hrs.

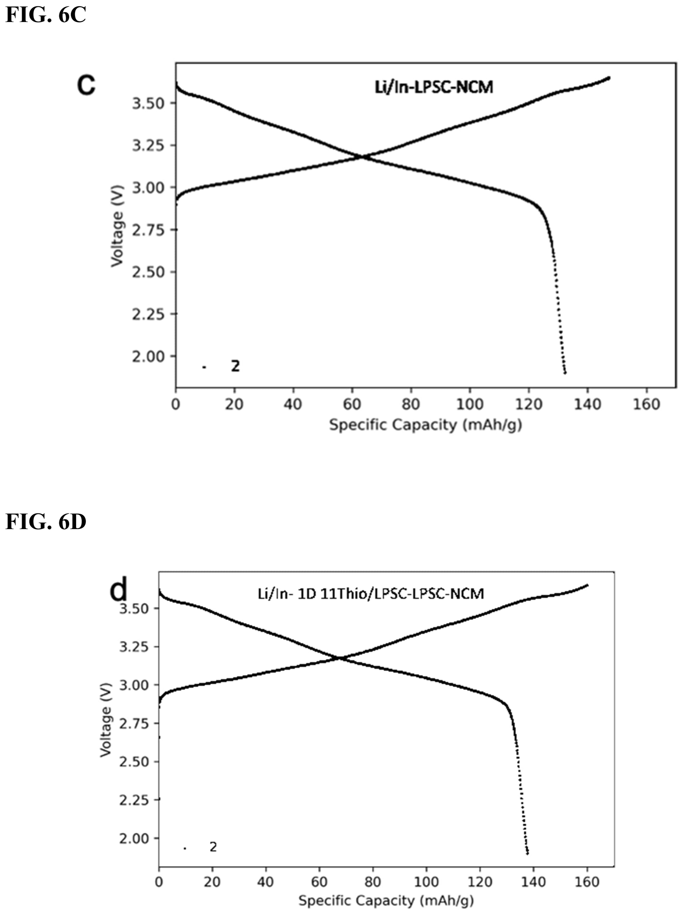

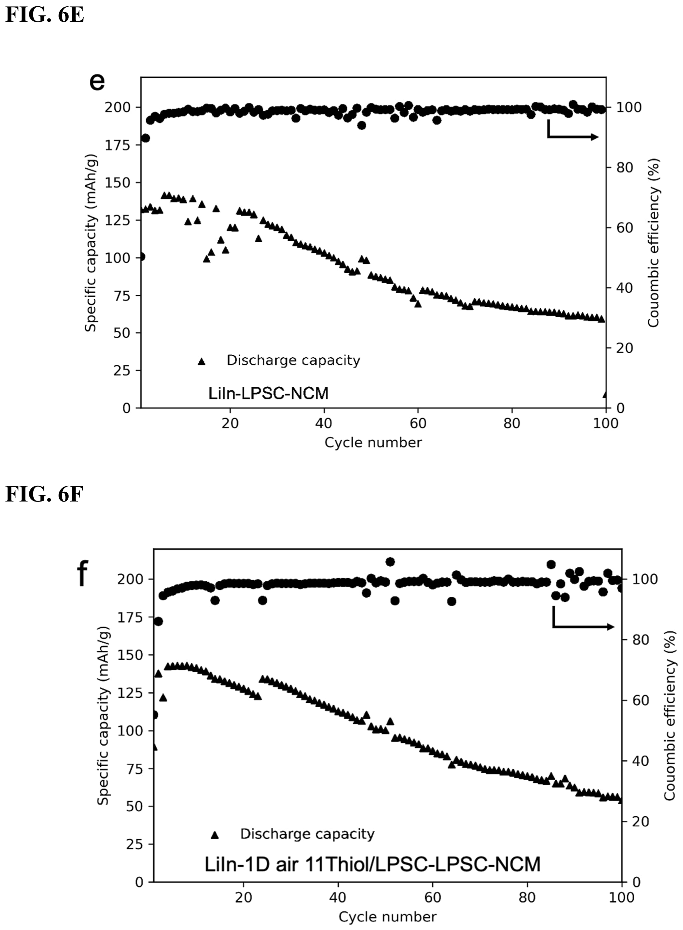

FIG. 6C to FIG. 6F show a LiNi_{0.8}Co_{0.1}Mn_{0.1}O₂ (NCM811) | LPSCl | LiIn all-solid-state full cell, assembled with either the LPSC (FIG. 6C and FIG. 6E) or 1-undecanethiol coated LPSC (FIG. 6D and FIG. 6E). With the organic coating protection, both cells exhibit similar 2^{nd} cycle charge capacity and 2^{nd} cycle Coulombic efficiency (CE) (FIG. 6C and FIG. 6D). The LPSCl fuel cell remains similar capacity and cycle retention after 15 cycles with discharge capacity 132.9 mAh/g for LPSC (FIG. 6E) and 133.9 mAh/g for the LPSC coated with 1-undecanethiol (FIG. 6F). This observation proves the remarkable strong protection effect of 1-undecanethiol on LPSC upon air exposure.

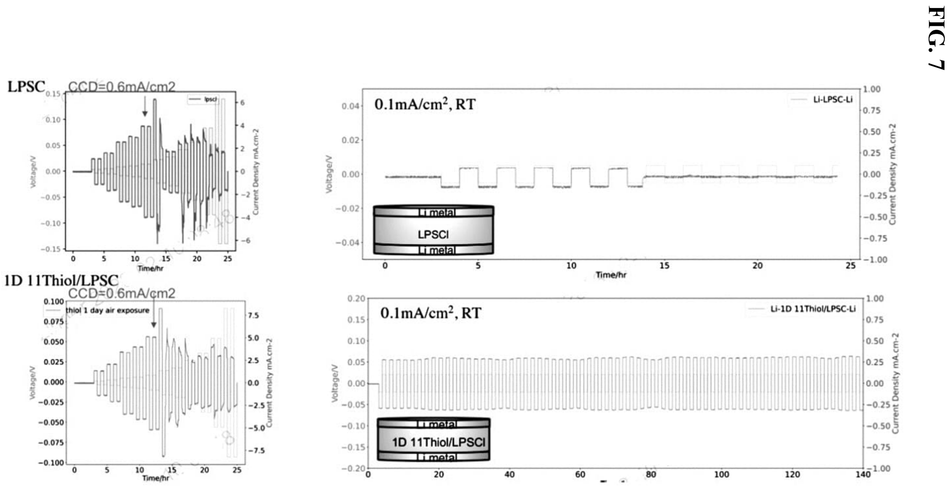

FIG. 7 shows the Critical Current Density and Lifetime Performance Comparison between the pristine LPSC and LPSC/1-undecanethiol mixture.
FIG. 8 shows ¹H NMR spectra collected on a pure 1-undecanethiol solution, the wet coated LPSC, and on the subsequently dried LPSC sample.
FIG. 9A is a Raman spectroscopy of a pure SH solution in the pristine state and after 1, 2 and 3 days of exposure to air with 33% RH (labeled as SH 1D air, SH 2D air and SH 3D air). FIG. 9B ¹H liquid NMR spectra of a pure SH solution in the pristine state and after 1, 2 and 3 days of exposure to air with 33% RH (labeled as SH 1D air, SH 2D air and SH 3D air, respectively).

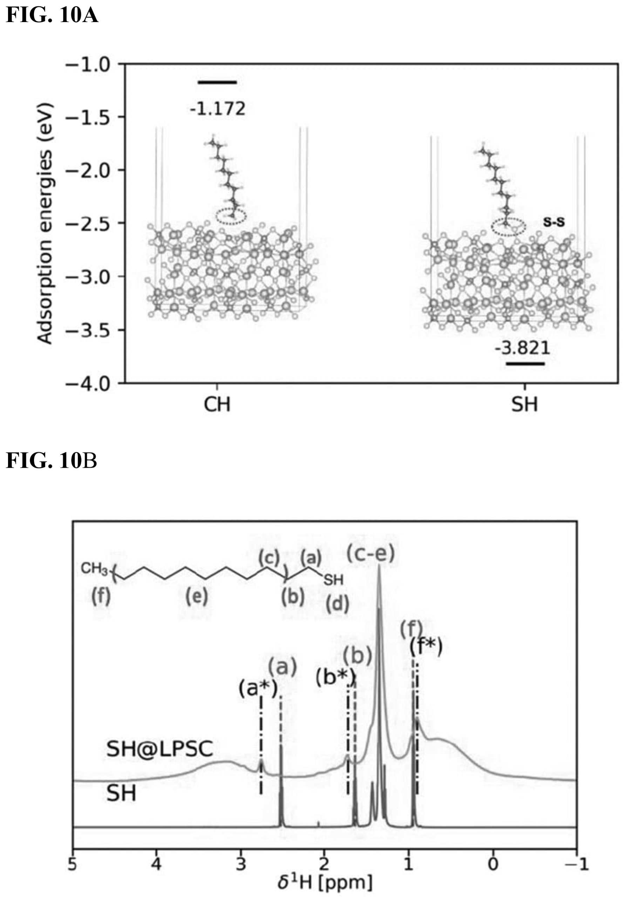

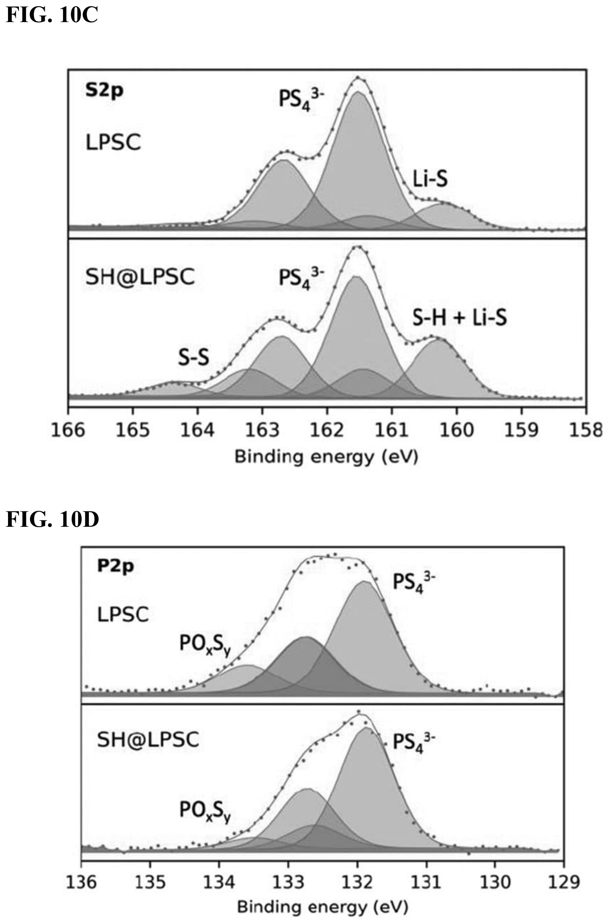

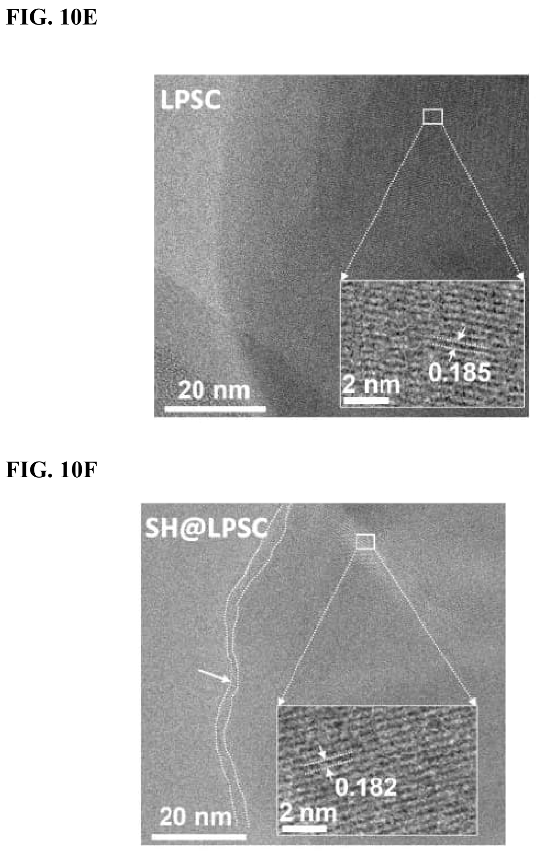

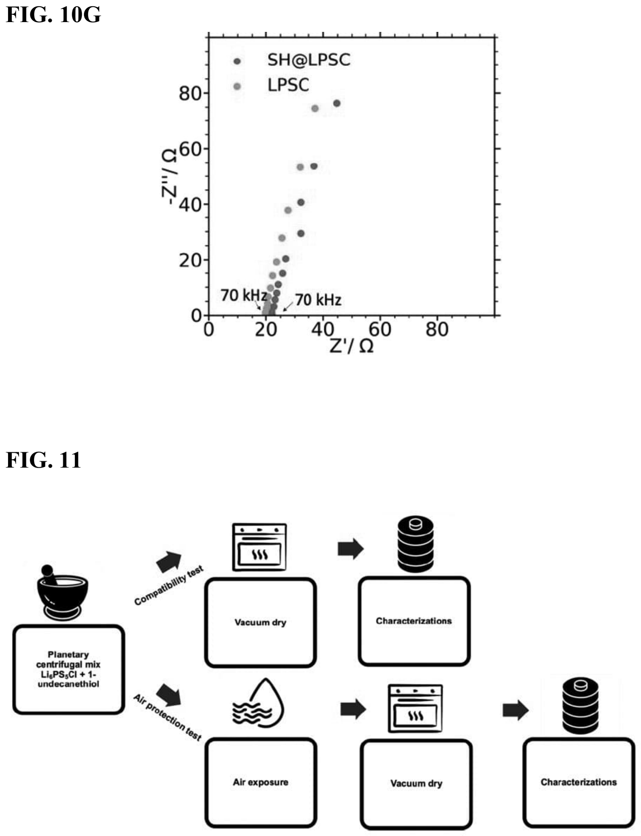

FIGs. 10A-G relate to chemical compatibility between the SH surface modifier and LPSC. FIG. 10A shows computed adsorption energies of undecane (CH) and SH onto the surface of LPSC. FIG. 10B ¹H spin echo NMR spectra collected at 18.8 T on a pure solution of SH and on SH@LPSC sample. The SH@LPSC spectrum was acquired at a magic angle spinning (MAS) speed of 60 kHz. ¹H resonances in the SH@LPSC spectrum, and their corresponding positions in the molecule, are labeled (a-f) in the upper left corner. The positions of the ¹H resonances associated with the SH molecule in the pure SH solution, and in the SH@LPSC sample, are indicated with a red dashed line and with a black dashed line/asterisk, respectively. S 2p (FIG. 10C) and P 2p (FIG. 10D) XPS spectra collected on LPSC and SH@LPSC. Cryo-TEM images of LPSC (FIG. 10E) and SH@LPSC (FIG. 10F), visualizing the modifying layer on the LPSC surface in SH@LPSC. FIG. 10G Nyquist plots of LPSC and SH@LPSC pellets sandwiched between two titanium rods.
FIG. 11 shows a synthetic process of surface modified electrolyte, which includes the following sequence: planetary centrifugal mixing of LPSC and SH with Thinky, subjecting the mixture to air exposure or without air exposure, 80 °C vacuum drying for 2 hours to remove resident absorbent, and structural characterization.
FIG. 12 Rietveld refinement of an XRD pattern obtained on an SH@LPSC without air exposure.

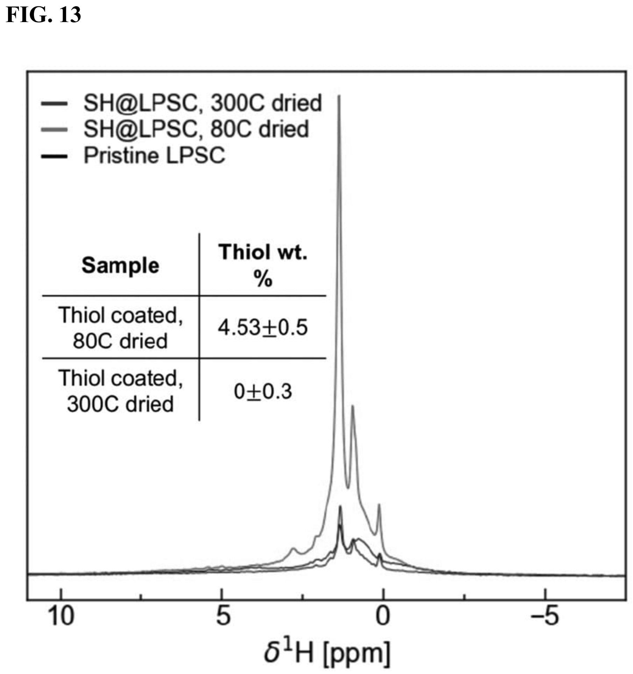

FIG. 13 is a ¹H spin echo NMR spectra collected on pure LPSC, SH@LPSC after vacuum drying at 80°C for 2 hours, and SH@LPSC after vacuum drying at 80°C for 2 hours and an additional heat treatment at 300°C for 3 hours. All spectra were obtained at 18.8 T and at a 20 kHz MAS speed. Spectra were scaled to have the same number of scans and total sample mass. All other measurement conditions were identical and recycle delays of 5*T1 were used. The inset table reports the weight percent of SH in the dried SH@LPSC samples, determined from fits and integration of the ¹H NMR signals in the spectra. While signals from the SH surface modifier dominate the ¹H spectrum collected on the SH@LPSC, SH residues only represent a small mass fraction of the sample, as only a very small ¹H signal arises from the LPSC phase. Some of the ¹H signal intrinsic to the LPSC *(see* spectrum obtained on the pristine LPSC) is lost during the heat treatment at 300 °C. In thiol quantification, the ¹H signal from the pristine material is subtracted from the total signal intensity to isolate contributions from the SH. Doing this on the sample that was heated at 300 °C results in a negative signal intensity, indicating that some of the protons in the pristine LPSC are evolved out of the sample during the 300 °C heating.
FIG. 14 shows representative fits from ¹H quantification of SH residue in SH@LPSC samples. All spectra were obtained at 18.8 T and at a 20 kHz MAS speed. T2*measurements were conducted to fit the decay of each component and compensate for lost signal during the 50 µs echo delay.

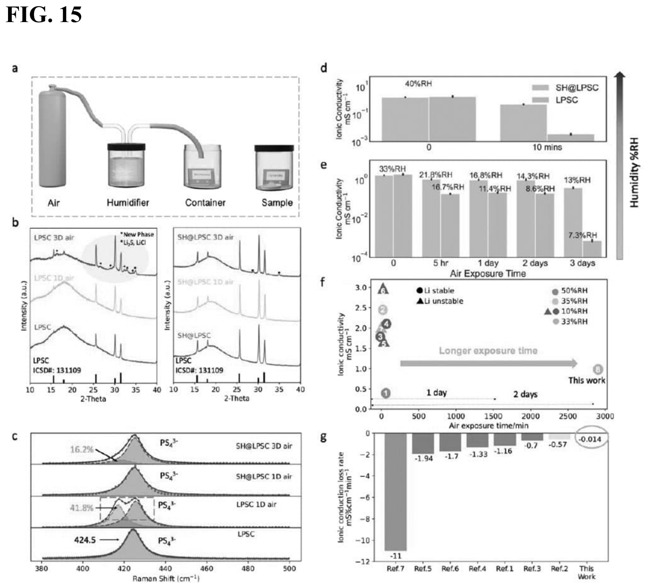

FIGs. 15 a-g show an evaluation of LPSC and SH@LPSC upon exposure to humid ambient air. (FIG. 15a) Schematic of a home-made setup for controlled exposure to humid air, comprising a thermos-hydrometer sensor to track changes in relative humidity in a hermetic container. (FIG. 15b) XRD patterns collected on LPSC and SH@LPSC exposed to humid air for up to 3 days. (FIG. 15c) Raman spectra of LPSC and SH@LPSC after 1 and 3 days of humid air exposure. (FIGs. 15d-e) Ionic conductivity of LPSC and SH@LPSC as a function of air exposure time and relative humidity. (FIG. 15f) A comparison of ionic conductivity as a function of exposure time to humid air, highlighting the vastly superior stability of the present SH@LPSC SSE for up to two orders of magnitude longer exposure times. (FIG. 15g) Ionic conductivity loss rate comparison. When normalized to the exposure duration, the dramatic improvement offered by SH is also evident.
FIG.16 shows the water uptake of LPSC and SH@LPSC samples exposed to air with 33% RH. FIG. 16a shows the water uptake of LPSC and SH@LPSC samples was quantified through the drop in relative humidity inside the vessel as a function of time; b) The rate of water uptake, *i.e.,* the first order derivative of curves in FIG. 16a shows the lower rate of water uptake in SH@LPSC indicate its better moisture stability than pure LPSC.
FIG. 17 shows complete XRD patterns collected on LPSC and SH@LPSC samples exposed to air from 5 hours to 3 days with 33%RH.
FIG. 18 shows ionic conductivity of 200mg LPSC and SH@LPSC (200mg of LPSC and 40mg of SH) as a function of air exposure time and relative humidity.
FIG. 19a-c show an analysis of material degradation upon moisture exposure. FIG. 19a-b shows XPS and FIG. 19c shows ³¹P spin echo solid-state NMR spectra collected on LPSC and SH@LPSC after 1 day or 3 days of air exposure. Solid-state NMR spectra were obtained at 18.8 T and at an MAS speed of 60 kHz.
FIG. 20 shows ⁶Li spin echo ssNMR spectra collected on LPSC and SH@LPSC samples exposed to air from 0 to 3 days with 33% RH. Spectra were obtained at 18.8 T under 20 kHz of magic angle spinning.
FIG. 21 shows ¹H spin echo ssNMR spectra collected on SH@LPSC and SH@LPSC samples exposed to air for 1 day with 33% RH. Spectra were obtained at 18.8 T under 10 kHz of magic angle spinning.
FIG. 22 shows ⁶Li spin echo ssNMR spectra of LPSC and CH@LPSC from 0 day to 3 days air exposure with 33%RH humidity. All spectra were obtained at 18.8 T under a MAS speed of 20 kHz.
FIG. 23 shows a ³¹P spin echo ss-NMR spectra of LPSC and CH@LPSC from 0 day to 3 days air exposure with 33%RH humidity. All spectra were obtained at 18.8 T under a MAS speed of 60 kHz.
FIG. 24 shows Li/Li symmetric cell critical current density of (a) LPSC, (b) SH@LPSC 1D air and (c) LPSC 1D air under room temperature.
FIG. 25 shows electrochemical performance of LPSC and SH@LPSC samples after 1 day of 33%RH air exposure. Voltage profiles of (a) an NCM811 composite| LPSC | LPSC 1D air |Li0.5In cell, and (c) an NCM811 composite |LPSC |SH@LPSC 1D air | Li0.5In cell at 60 °C and at a 0.1 C rate. (b), (d) 50 cycle capacity retention for the cells shown in (a) and (c), respectively.
FIG. 26 shows (a) a voltage profiles of an NCM811 composite| LPSC |Li_{0.5}In cell over the first 5 cycles and (b) shows long-term cycling performance of an NCM811 composite| LPSC | Li_{0.5}In.
FIG. 27 shows Complete removal of all SH residues through a 300°C heating process (a) XRD patterns and (b) Nyquist plots of pellets sandwiched between two titanium rods made of LPSC, SH@LPSC vacuum dried at 80°C for 2 hours and SH@LPSC vacuum dried at 80°C for 2 hours followed by 300°C heat for 3 hours, respectively.

### DETAILED DESCRIPTION

Hereinafter, the present disclosure will be described in detail. It should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the aspects of the disclosure described herein and the elements shown in the drawings are just aspects of the present disclosure, but not intended to fully describe the technical aspects of the present disclosure, so it should be understood that other equivalents and modifications could have been made thereto at the time the application was filed. Unless defined otherwise, all the technical and scientific terms used herein have the same meanings as commonly known by a person skilled in the art. In the case that there is a plurality of definitions for the terms herein, the definitions provided herein will prevail.

Unless specified otherwise, all the percentages, portions and ratios in the present disclosure are on weight basis.

Unless indicated to the contrary, the numerical parameters set forth in the following specification and attached claims are approximations that may vary depending upon the desired properties sought to be obtained according to aspects of the disclosure. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values.

While compositions and methods are described herein in terms of "comprising" various components or steps, the compositions and methods can also "consist essentially of" or "consist of" the various components and steps. The term "comprise(s)" or "include(s)" when used in this specification, specifies the presence of stated elements, but does not preclude the presence or addition of one or more other elements, unless the context clearly indicates otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure. The terms "about" and "approximate", when used along with a numerical variable, generally means the value of the variable and all the values of the variable within an experimental error *(e.g.,* 95% confidence interval for the mean) or within a specified value ± 10% or within a broader range. Unless otherwise indicated, all numbers expressing quantities of ingredients, properties such as molecular weight, reaction conditions, and so forth used in the present specification and associated claims are to be understood may be modified by the term "about."

"A and/or B" when used in this specification, specifies "either A or B or both."

An aspect of the present disclosure relates to a solid state battery comprising a solid electrolyte material as an electrolyte. Specific examples of the solid state battery include any type of primary battery, secondary battery, fuel cell, solar cell or capacitor such as a super capacitor. In particular, the secondary battery is, to be specific, a lithium ion secondary battery.

In an aspect of the disclosure, the solid state battery according to the present disclosure comprises a negative electrode, a positive electrode and a solid electrolyte interposed between the negative electrode and the positive electrode. Hereinafter, the configuration and effect of the present disclosure will be described in detail.

In the present disclosure, the solid electrolyte composition comprises a sulfide-containing solid electrolyte material that has an organic coating. In an aspect, a long chain thiol may be used as the organic coating. According to aspects of the disclosure, the coating contains a hydrophobic chain, which creates a hydrophobic barrier, and protects the sulfide-containing solid electrolyte material from air, water and/or ambient conditions.

As explained above, sulfide-containing solid electrolytes are highly susceptible to nucleophilic attacks from polar organic solvents. Many common solvents used for conventional liquid lithium-ion batteries are not suitable to use with SSEs. In an aspect, surface molecular engineering enables processing of sulfide solid electrolytes in humid ambient air.

For purposes of the present disclosure, any suitable sulfide-containing electrolyte material may be used. As used here, "sulfide based electrolyte" refers to an electrolyte that includes inorganic materials containing S which conduct ions (*e.g.,* Li⁺), and which are suitable for electrically insulating the positive and negative electrodes of an electrochemical cell. Exemplary sulfide-containing electrolytes are set forth in Shaojie Chen et al., "Sulfide solid electrolytes for all-solid-state lithium batteries: Structure, conductivity, stability and application," Energy Storage Materials, Volume 14, Pages 58-74 (September 2018), which is hereby expressly incorporated by reference in its entirety.

For example, many sulfide-containing electrolyte materials are particularly attractive due to their superionic conductivities (as high as ~10-2 S cm-1) and deformability. In particular, Li₃P₇S₁₁, Li₁₀GeP₂Si₂, and Na₃PS₄ and Li₆PS₅Cl have been reported to exhibit high ionic conductivities; some even close to those of liquid electrolytes. According to aspects of the disclosure, the sulfide solid electrolyte materials also provide a low Young's modulus, which is beneficial for producing favorable interface contacts with electrode materials by simple cold pressing at room temperature.

The sulfide-containing solid electrolyte, according to aspects of the disclosure, may contain sulfur (S) and have the ionic conductivity of metal belonging to Group I or II in the periodic table, *e.g.,* Li⁺. Additionally, in an aspect of the present disclosure, the selected solid electrolyte has the ionic conductivity of 1x10⁻⁵ S/cm, or according to some aspects of the disclosure, 1x10⁻³ S/cm or more.

Non-limiting examples of the sulfide-containing solid electrolyte may include Li-P-S-based glass, Li-P-S-based glass ceramic and argyrodite-based sulfide-containing solid electrolyte.

Non-limiting examples of the sulfide-containing solid electrolyte may include at least one of xLi₂S-yP₂S₅, Li₂S-LiI-P₂S₅, Li₂S-LiI-Li₂O-P₂S₅, Li₂S-LiBr-P₂S₅, Li₂S-Li₂OP₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅ -Al₂S₃, Li₂S-GeS₂ or Li₂S-GeS₂-ZnS, Li6PS5X (X = at least one of Cl, Br or I).

In an aspect of the present disclosure, the sulfide-containing solid electrolyte may comprise at least one selected from LPS-based glass or glass ceramic such as xLi₂S-yP₂S₅, or an argyrodite-based sulfide-containing solid electrolyte (Li₆PS₅X; X = Cl, Br, I).

The sulfide-containing solid electrolyte material is processed to form a coating on its surface. The sulfur or leaving group appears to react with the sulfur in the electrolyte material to interact non-covalently, or form a covalent bond, *e.g.,* a sulfide bond or a disulfide bond.

The sulfur of the organic compound may be attached to the surface of the solid electrolyte material, (e.g., perhaps forming disulfide bond or a sulfide bond at one end), and the hydrophobic tail is arranged to surround the electrolyte material. This hydrophobic layer creates a barrier for water, and provides protection to the electrolyte material.

To form an organic coating, the sulfide-containing solid electrolyte material may be combined with at least one compound of Chemical Formula 1 or Chemical Formula 2:

R-A Chemical Formula (1)

R-A'-R Chemical Formula (2)

wherein: A is a -SH group, an isocyanate, an amine, or a suitable leaving group *(e.g.,* such as a triethoxysilyl or a trimethoxysilyl); A' is a -S- moiety or a -S-S- moiety; and each R is independently a substituted or unsubstituted C3-C20 alkyl group.

In certain aspects each R group is independently selected so that the compound of Chemical Formula 1 or Chemical Formula 2 will be a liquid. According to some aspects of the disclosure, the total number of carbons (including the chain and substituents) will be from 6 to 16 carbons, or according to some aspects of the disclosure, from 6 to 12 carbons, from 8 to 12 carbons, or from 10 to 12 carbons. The compound of Chemical Formula 1 may have a total of 6 carbons, 7 carbons, 8 carbons, 9 carbons, 10 carbons, 11 carbons, 12 carbons, 13 carbons, 14 carbons, 15 carbons, 16 carbons, 17 carbons, 18 carbons, 19 carbons, or 20 carbons. If the total number of carbons is too low, the compound may be too volatile for use. If the total number of carbons is too high, the compound may not be a liquid. Thus, according to some aspects of the disclosure, the number of total carbons, as well as the substituents and main chains can be adjusted as needed so that the compound is a liquid.

Each R group is independently a substituted or unsubstituted C3-C20 alkyl group, including, but not limited to a substituted or unsubstituted n-propyl, isopropyl, n-butyl, isobutyl, sec-butyl, tert-butyl, n-pentyl, tert-pentyl, isopentyl, n-hexyl, isohexyl, sechexyl, tert-hexyl, n-heptyl, isoheptyl, sec-heptyl, tert-heptyl, n-octyl, isooctyl, sec-octyl, tert-octyl, n-nonyl, isononyl, sec-nonyl, tert-nonyl, n-decyl, isodecyl, sec-decyl, tert-decyl, n-undecyl, isoundecyl, sec-undecyl, tert-undecyl, n-dodecyl, isododecyl, sec-dodecyl, tertdodecyl, etc.

The R group may be substituted with one or more groups, including but not limited to ester, ketone, halogen (fluorine, chlorine, bromine), and/or one or more C3-C20 alkyl groups (*e.g*., a C3-C8 alkyl group). In some aspects, the R group may be substituted with an aryl *(e.g.,* phenyl) or a heteroaryl group *(e.g.,* a five or six member ring, including but not limited to pyridine, pyrrole, furan, or thiophene).

The term "leaving group" may be understood as defined by the IUPAC, *e.g.,* it may be an atom or group of atoms that detaches from the main or residual part of a substrate during a reaction or elementary step of a reaction. For instance, a leaving group may be a fragment that departs with a pair of electrons in heterolytic bond cleavage. In certain aspects, leaving groups may be anions or neutral species, departing from neutral or cationic substrates. Suitable leaving groups may be used, which are compatible with the solid electrolyte material.

In some aspects, the A group may be a "triethoxysilyl" moiety (*e.g*., derived from HSi(OC₂H₅)₃) or "trimethoxysilyl" (*e.g*., derived from HSi(OCH₃)₃).

The term "thiol" may be understood as an organosulfur compound of the form R-SH, where R represents an alkyl or other organic substituent.

The term "isocyanate" may be understood as a functional group with the formula R-N=C=O, where R may be an alkyl or aryl group.

The term "amine" may be understood as a compounds or a functional group that contain a basic nitrogen atom with a lone pair. Amines are formally derivatives of ammonia (NH3), wherein one or more hydrogen atoms have been replaced by a substituent such as an alkyl or aryl group (*e.g*., alkylamines and arylamines). The substituent -NH₂ is called an amino group. In certain aspects, the amine may include primary amines, secondary amines, and/or tertiary amines. In certain aspects, amino groups can be further converted into a useful leaving group, *e.g.,* by conversion to an ammonium salt, aryl(sulfonyl)amino groups, *etc.*

In some aspects, the sulfide-containing solid electrolyte material, and the compound of Chemical Formula 1 may be combined in a weight ratio of about 1:1 to 25:1, or according to some aspects, a weight ratio of about 1:1 to 10:1, a weight ratio of about 1:1 to 5:1, or a weight ratio of about 1:1.

Since sulfide-containing materials are sensitive to air and moisture, and might decompose to produce toxic gas such as H₂S, all the synthesis and test steps are, according to some aspects of the disclosure, performed in a glovebox (*e.g*., MBraun MB 200B, H₂O <0.5 ppm, O₂ < 5.0 ppm) filled with argon. Optionally, the reaction mixture of the sulfide-containing solid electrolyte material, and the compound of Chemical Formula 1 may further comprise a suitable solvent to aid in the dispersion.

Suitable reaction conditions may be used. In an aspect, the reaction temperature may be from room temperature to about 50°C. In some aspects, the reaction temperature may be from about 15°C to about 40°C, from about 20°C to about 40°C, from about 25°C to about 40°C.

In an aspect, the reaction time may be about 30 minutes. In some aspects, the reaction time may be from about 1 hour to about 8 hours, and according to some aspects, from about 2 hours to about 7 hours or from about 3 hours to about 5 hours.

The progress of the reaction can be monitored using any suitable technique, including but not limited to a suitable technique, *e.g*., such as X-ray Photoelectron Spectroscopy or Nuclear Magnetic Resonance (NMR) .

After the reaction is complete, the coated solid electrolyte material may be dried under any suitable conditions. In an aspect, the drying temperature will be from about 30°C to about 100°C, from about 40°C to about 100°C, from about 50°C to about 100°C. According to some aspects of the disclosure, the drying is conducted under vacuum conditions. In an aspect, the drying time will be 30 minutes or longer. In another aspect, the drying time will be one hour or longer, and, according to some aspects, 2 hours or longer, 8 hours or longer, or 12 hours or longer.

In the present disclosure, the average particle size of the sulfide-containing solid electrolyte material may be adjusted to an appropriate range for the solid state battery. In some aspects of the present disclosure, the solid electrolyte may have an average particle size of 0.1 *µ*m to 50 *µ*m.

In some aspects of the present disclosure, the solid electrolyte membrane may be manufactured by any suitable method.

For example, after the solid electrolyte material is coated, it may optionally be combined with other components if needed, and mixed to obtain a homogenous mixture. Subsequently, this mixture may be added to a predetermined organic solvent and dispersed to prepare a slurry, the slurry is applied to a release plate, and then dried to form a sheet shape. If necessary, the result of the sheet shape may be pressed to obtain a solid electrolyte membrane.

The thickness of the solid electrolyte layer formed by the lithium-tin-metal-sulfide based compound is greatly different depending on the structure of the all-solid-state battery. However, for example, according to some aspects, it may be 0.1 µm or more and 1 mm or less, and according to additional aspects, 1 µm or more and 100 µm or less. The solid electrolyte, according to some aspects, has high lithium ion conductivity, and the lithium ion conductivity at room temperature is, according to some aspects, 1×10⁻⁴ S/cm or more, for example.

In an aspect, the solid electrolyte may further include a solid electrolyte commonly used in the all-solid-state battery. As an example, an inorganic solid electrolyte or an organic solid electrolyte may be used.

In the case of the inorganic solid electrolyte, a ceramic material, a crystalline material or an amorphous material may be used, and the inorganic solid electrolytes such as thio-LISICON (Li_{3.25}Ge_{0.25}P_{0.75}S₄), Li₂S-SiS₂, Lil-Li₂S-SiS₂, Lil-Li₂S-P₂S₅, Lil-Li₂S-P₂O₅, LiI-Li₃PO₄-P₂S₅, Li₂S-P₂S₅, Li₃PS₄, Li₇P₃S₁₁, Li₂O-B₂O₃, Li₂O-B₂O₃-P₂O₅, Li₂O-V₂O₅-SiO₂, Li₂O-B₂O₃, Li₃PO₄, Li₂O-Li₂WO₄-B₂O₃, LiPON, LiBON, Li₂O-SiO₂, LiI, Li₃N, Li₅La₃Ta₂O₁₂, Li₇La₃Zr₂O₁₂, Li₆BaLa₂Ta₂O₁₂, Li₃PO(_{4-3/2w)}Nw (wherein w is w<1), and Li_{3.6}Si_{0.6}P_{0.4}O₄ can be used.

In addition, examples of the organic solid electrolyte include organic solid electrolytes prepared by mixing lithium salt to polymeric materials such as polyethylene derivatives, polyethylene oxide derivatives, polypropylene oxide derivatives, phosphate ester polymers, agitation lysine, polyester sulfide, polyvinyl alcohol, and polyvinylidene fluoride. In this case, these may be used alone or in combination of at least one.

The above-described coated sulfide-containing electrolyte material can be used for a solid electrolyte for an all-solid-state battery. The all-solid-state battery contains a positive electrode, a negative electrode, with the solid electrolyte interposed therebetween.

Meanwhile, the positive electrode and the negative electrode for the all-solid-state battery according to aspects of the present disclosure are not particularly limited and any suitable one known in the art can be used.

The all-solid-state battery proposed according to aspects of the present disclosure defines the constitution of the solid electrolyte as described above, and the other elements constituting the battery, that is, the positive electrode and the negative electrode, are not particularly limited in the present disclosure and follow the description below.

In an aspect, the negative electrode for the all-solid-state battery is a lithium metal alone, or negative electrode active material can be laminated on the negative electrode current collector.

The negative electrode current collector is not particularly limited as long as it is conductive without causing any chemical change in the all-solid-state battery, and for example, copper, stainless steel, aluminum, nickel, titanium, sintered carbon, copper or stainless steel whose surface is treated with carbon, nickel, titanium, silver or the like, or aluminum-cadmium alloy, etc. can be used. Additionally, as with the positive electrode current collector, the negative electrode current collector may include various forms such as a film, a sheet, a foil, a net, a porous body, a foam, and a nonwoven fabric having minute irregularities formed on their surfaces.

The negative electrode active material may be any one selected from the group consisting of lithium metal, a lithium alloy, a lithium metal composite oxide, a lithiumcontaining titanium composite oxide (LTO), and a combination thereof. In this case, the lithium alloy may be an alloy of lithium and at least one metal selected from Na, K, Rb, Cs, Fr, Be, Mg, Ca, Sr, Ba, Ra, Al and Sn. Also, the lithium metal composite oxide may be lithium and an oxide (MeOₓ) of lithium and any one metal (Me) selected from the group consisting of Si, Sn, Zn, Mg, Cd, Ce, Ni and Fe and for example, may be LixFe₂O₃ (0 ≤ x ≤ 1) or LixWO₂ (0 ≤ x ≤ 1).

In addition, the negative electrode active material may be metal composite oxides such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x=1; 1=y=3; 1=z=8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅, and carbon-based negative electrode active materials such as crystalline carbon, amorphous carbon or carbon composite may be used alone or in combination of two or more.

In some aspects of the present disclosure, the positive electrode may comprise a positive electrode active material layer comprising a positive electrode active material, a positive electrode conductive material and a solid electrolyte. The positive electrode active material layer may further comprise a binder resin for the positive electrode if necessary. Additionally, the positive electrode comprises a current collector if necessary, and the positive electrode active material layer may be positioned on at least one surface of the current collector.

In some aspects of the present disclosure, the positive electrode active material may comprise at least one of lithium cobalt oxide (LiCoO₂), lithium nickel oxide (LiNiO₂), lithium manganese oxide of Formula Li₁₊ₓMn₂₋ₓO₄ (x is 0 to 0.33, for example LiMn₂O₄), LiMnO₃, LiMn₂O₃, LiMnO₂, lithium copper oxide (Li₂CuO₂); vanadium oxide such as LiV₃O₈, LiV₂O₄, V₂O₅, Cu₂V₂O₇, Ni-site lithium nickel oxide represented by Formula LiNi₁₋ₓMₓO₂ (M = Co, Mn, Al, Cu, Fe, Mg, B or Ga, 0<x<1), for example, LiNi_{1-z}(Co,Mn,Al)_{z}O₂ (0<z<1); lithium manganese composite oxide represented by Formula LiMn₂₋ₓMₓO₄ (M = Co, Ni, Fe, Cr, Zn or Ta, x = 0.01 ~ 1, for example, LiMn_{1.5}Ni_{0.5}O₄ or Li₂Mn₃MO₈ (M = Fe, Co, Ni, Cu or Zn); LiMn₂O₄ with partial substitution of alkali earth metal ion for Li in Formula; disulfide compounds; Fe₂(MoO₄)₃, or lithium iron phosphate (LiFePO₄). In some aspects of the present disclosure, the lithium iron phosphate may have all or at least part of the of the active material particle surface coated with a carbon material to improve conductivity.

According to aspects of the disclosure, the positive electrode active material may comprise at least one selected from Lithium Nickel Cobalt Manganese Oxide (for example, Li(Ni,Co,Mn)O₂, LiNi_{1-z}(Co,Mn,Al)_{z}O₂ (0<z<1)), Lithium Iron Phosphate (for example, LiFePO4/C), Lithium Nickel Manganese Spinel (for example, LiNi_{0.5}Mn₁.₅O₄), Lithium Nickel Cobalt Aluminum Oxide (for example, Li(Ni,Co,Al)O₂), Lithium Manganese Oxide (for example, LiMn₂O₄) and Lithium Cobalt Oxide (for example, LiCoO₂).

According to some aspects of the present disclosure, the positive electrode active material may comprise lithium transition metal composite oxide, and the transition metal may comprise at least one of Co, Mn Ni or Al.

In some aspects of the present disclosure, the lithium transition metal composite oxide may comprise at least one of compounds represented by the following formula 1.

[Formula 1] LiₓNiₐCo_{b}Mn_{c}M_{z}O_{y}

In the above Formula 1, 0.5≤x≤1.5, 0<a≤1, 0≤b<1, 0≤c<1, 0≤z<1, 1.5<y<5, a+b+c+z is 1 or less, and M may comprise at least one selected from Al, Cu, Fe, Mg and B.

In some aspects of the present disclosure, the positive electrode active material includes a positive electrode active material having high Ni content of a of 0.5 or more, and its specific example may comprise LiNi_{0.8}Co_{0.1}Mn_{0.1}O₂.

In some aspects of the present disclosure, the positive electrode conductive material may be, for example, at least one conductive material selected from the group consisting of graphite, carbon black, carbon fibers or metal fibers, metal powder, conductive whiskers, conductive metal oxide, activated carbon or polyphenylene derivatives. More specifically, the positive electrode conductive material may be at least one conductive material selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide.

The current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface.

The positive electrode binder resin may include polymer for electrode commonly used in the technical field. Non-limiting examples of the binder resin may include, but are not limited to, polyvinylidene difluoride, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan and carboxyl methyl cellulose.

In some aspects of the present disclosure, the solid electrolyte included in the positive electrode may comprise at least one selected from a polymer-based solid electrolyte, an oxide-based solid electrolyte and a sulfide-containing solid electrolyte. In some aspects of the present disclosure, the positive electrode active material may comprise the sulfide- containing solid electrolyte described in the solid electrolyte membrane.

In some aspects of the present disclosure, the positive electrode active material is included in the positive electrode in an amount of 50 wt% or more based on 100 wt% of the positive electrode active material layer. Additionally, the solid electrolyte is, according to aspects of the disclosure, included in the positive electrode in an amount of 10 wt% to 40 wt% based on 100 wt% of the positive electrode active material layer.

Meanwhile, in some aspects of the present disclosure, the positive electrode may have a loading amount (per electrode area) of 5 mAh/cm² or more, 6 mAh/cm² or more, or 10 mAh/cm² or more. In the battery according to the present disclosure, when the high loading positive electrode is applied, it is possible to operate the battery on the electrochemically stable level.

Meanwhile, in some aspects of the present disclosure, the positive electrode active material layer may be obtained by adding the positive electrode active material, the conductive material, the binder resin and the solid electrolyte to an appropriate solvent to prepare a slurry and casting the slurry, or may be obtained by a manufacturing method according to a dry mixing process without a solvent. Meanwhile, in some aspects of the present disclosure, it is possible to achieve the uniform mixing of the positive electrode materials in the positive electrode, thereby obtaining a high loading positive electrode, and in this aspect, the positive electrode is obtained by the dry mixing process using no solvent.

The method of manufacturing the positive electrode active material layer by the dry mixing method may be described, for example, as below. First, the positive electrode materials comprising the positive electrode active material, the conductive material and the binder resin are put into a mixing device and mixed by a mechanical method to obtain a mixture. The mixing device includes any type of device that can form a comparatively homogeneous mixture phase such as a well-known mixer agitator, and is not limited to a particular type of device. Meanwhile, in some aspects of the present disclosure, to improve the dispersion of solids and induce the fibrous form of the binder resin in the mixing process, a temperature rising process may be included. In the temperature rising process, the temperature may be appropriately controlled in the range of about 30°C to 100°C. Subsequently, the positive electrode active material layer may be formed by extracting the mixture into the shape of an electrode (a wide film shape) using an extruder, and adjusting the thickness through a pressing process. The positive electrode active material layer may be applied to the electrode with no current collector, or if necessary, the current collector may be attached to the obtained positive electrode active material layer to prepare the positive electrode including the current collector.

### Examples

### (1) Preparation of 1-undecanethiol coated Li₆PS₅Cl

Li₆PS₅Cl (purchased from NEI corporation) was used as received. All samples were handled in a glovebox with oxygen and water levels less than 0.5 ppm. An amount of 560 mg of Li₆PS₅Cl and 112 mg 1-undecanethiol (Sigma Aldrich) (at a 5:1 weight ratio) were measured into a 30 mL plastic vial with zirconium balls and spin mixed with a planetary mixer (THINKY^{™}) for 20 minutes at 2000 rpm.

### (2) Air exposure and drying of samples

The 30 mL plastic vial with the mixture of the 560 mg of Li₆PS₅Cl and 112 mg of 1-undecanethiol from the previous step was placed into a 16 oz airtight jar to minimize air exposure. The humidity and temperature are recorded. The sample was exposure for the following exposure times: 1 day (24 hours), 3 days (72 hours), 5 days (120 hours), and 7 days ( 168 hours). After air exposure, the samples were taken into a vacuum oven to dry excess solvent and moisture from the surface of the materials. The samples were dried under vacuum at 80 °C for 2 hours with a heating ramp of 1 °C/min. The samples were then moved into the glovebox for further use.

### (3) NMR Characterization

Samples with the 1-undecanethiol coated material were investigated with ¹H and ³¹P solid-state NMR (ss-NMR) to assess the effectiveness of the coating at preventing the chemical degradation of LPSC when exposed to ambient conditions, and to understand the interaction mechanism between the organic molecules of the coating and the LPSC surface. Because ss-NMR is element-specific and sensitive to both crystalline and amorphous phases, it can selectively probe ¹H nuclei within the 1-undecanethiol molecules and ³¹P nuclei within the LPSC electrolyte.

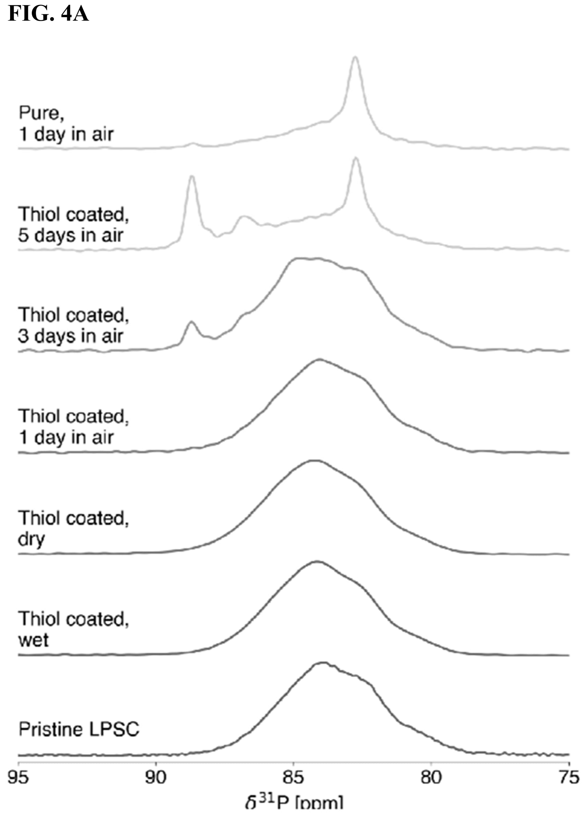

FIG. 4A shows the ³¹P ss-NMR spectra for pristine LPSC, as well as for pure and 1-undecanethiol (thiol)-coated LPSC samples after exposure to ambient air for the various amounts of time indicated. No clear differences are observed between the ³¹P spectra obtained on the pristine LPSC and on the thiol-coated wet and dried samples, signifying that the LPSC bulk structure was unchanged upon exposure to the coating solution, and even upon subsequent exposure to air.

In order to establish a baseline for the impact of air exposure on LPSC, a ³¹P ss-NMR spectrum was collected on a pure LPSC sample exposed to air for 1 day and is presented at the top of FIG. 4A. As shown, without any coating, air exposure leads to significant degradation of the LPSC bulk structure, reflected by the loss of the broad pristine LPSC resonance and the appearance of sharp resonances at 82.9 and 88.7 ppm, assigned to POS₃³⁻ tetrahedral units and isolated PS₄³⁻ tetrahedra in γ-Li₃PS₄-like environments, respectively. On the other hand, the ³¹P ss-NMR spectrum collected on a thiol-coated sample exposed to ambient air for 1 day is nearly identical to that obtained on the pristine sample, indicating that the coating protected the LPSC structure from degradation. Even after 3 days in air, most of the ³¹P spectral features observed for the pristine sample were retained. Nevertheless, the onset of degradation is suggested by the appearance of the 82.9 and 88.7 ppm resonances, as well as a third resonance at 86.8 ppm assigned to isolated PS₄³⁻ tetrahedra in *β*-Li₃PS₄-like environments. For longer exposure times, the broad LPSC resonance is largely gone as the peaks at 82.9 ppm, 86.8 ppm, and 88.7 ppm grow further, indicating that the LPSC bulk structure has been lost. Interestingly, air exposure of the coated samples appears to lead to the formation of more Li₃PS₄-like isolated PS₄³⁻ tetrahedra relative to the pure sample as evidenced by the greater intensity of the resonance at 86.8 ppm and 88.7 ppm in the coated LPSC samples.

³¹P spectra collected on a set of samples coated with undecane instead of 1-undecanethiol and exposed to air following the same procedure as above highlight the role that the thiol chain end plays in the protection mechanism for LPSC. Coating with undecane, which has a methyl end group rather than a thiol group, leads to significant changes in the ³¹P resonances of the LPSC sample after only one day of air exposure. The above results clearly demonstrate that the thiol coating delays the onset of degradation and largely preserves the LPSC structure after up to 72 h of exposure to ambient air.

A series of ¹H ss-NMR spectra, shown in FIG. 4B, were collected on a pure 1-undecanethiol solution and on thiol-coated LPSC samples in the wet and dry states, to investigate the nature of the interactions between the organic molecules of the coating and the LPSC surface, and to assess the efficacy of the drying step. Six ¹H resonances can be resolved in the spectrum obtained on the pure undecanethiol solution and were assigned to the six ¹H local environments present in undecanethiol molecules, labeled (a-f), based on predicted shifts from the ACD/HNMR Predictor software package and agreement between integrated signal intensities and ¹H environment multiplicity. As shown in FIG. 4B, when the 1-undecanethiol solution was mixed with LPSC ('LPSC coated, wet' sample), all of these resonances remain but the (a) and (b) resonances were shifted downfield (to more positive ppm frequencies). The (a) and (b) resonances correspond to ¹H nuclei bonded to carbons one and two bonds away from the thiol end group, respectively. In NMR, the isotropic shift of a nucleus depends on the degree of shielding from the static magnetic field provided by the local electron cloud and therefore varies strongly with its bonding environment. Hence, changes in the isotropic shift of the (a) and (b) resonances suggest that the undecanethiol molecules interact or bond to the LPSC surface at the thiol end. The downfield shift of the (a) resonance (0.2 ppm) is greater than that of the (b) resonance (0.08 ppm), in line with the greater change in the electron cloud around the ¹H nucleus closest to the thiol end.

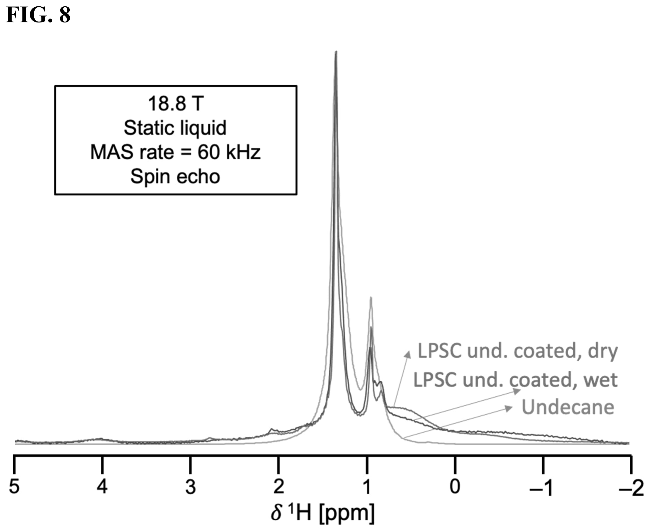

While the disappearance of the (d) resonance assigned to the ¹H of the thiol group should provide further evidence for thiol end attachment to the LPSC surface, signal overlap with the (c) and (e) resonances and the unknown amount of undecanethiol in the 'LPSC coated, wet' and 'LPSC coated, dry' samples make it difficult to reliably assess changes in (d) signal intensity. An upfield shift is observed for the (f) resonance (0.08 ppm) that corresponds to the undecanethiol methyl chain end. This slight upfield shift is tentatively attributed to a weak Van der Waals bonding interaction between the methyl end of the undecanethiol molecules and the LPSC surface. This assignment is corroborated by the nearly identical upfield ¹H shift observed when LPSC is coated with undecane as shown in FIG. 8

The broad ¹H resonance observed between 0.5-1 ppm corresponds to protonated impurities in the pristine material, as confirmed by the spectrum shown in SI FIG. 8. Drying the LPSC sample at 80°C after exposure to the 1-undecanethiol solution does not remove all of the coating, as evidenced by the intense ¹H NMR signal collected on the 'LPSC coated, dry' sample. This spectrum contains similar (a-f) resonances as the one obtained on the 'LPSC coated, wet' sample, but an additional broad signal is observed in the 3-3.5 ppm range. This additional signal is likely due to the presence of a range of orientations and restricted motion of the undecanethiol molecules at the surface of the LPSC particles in the dry state, resulting in a range of chemical shifts and signal broadening.

### (4) PXRD Characterization

The samples were also characterized using powder XRD ("PXRD") measurements. The compatibility of the coating was evaluated by checking the change (if any) of the crystal structure and the conductivity through EIS after the adsorbent was coated onto LPSC.

As shown in FIG. 2A and 3A, the XRD results indicate that even after 1-undecanethiol is coated onto LPSC, there is no change in bulk crystal structure. That is, LPSC has a structure of argyrodite. After exposure to 1-undecanethiol, Rietveld refinement shows that the argyrodite structure remain the same. There is no change in the bulk crystal structure.

### (5) Raman Characterization

The Raman diffraction was measured by using the Bruker from 10° - 80 ° at a scan rate of 2°/min. Powders were ground and prepared in a glovebox covered with Kapton tape to prevent air exposure to the samples. Raman spectroscopy measurements were taken using 532 nm source.

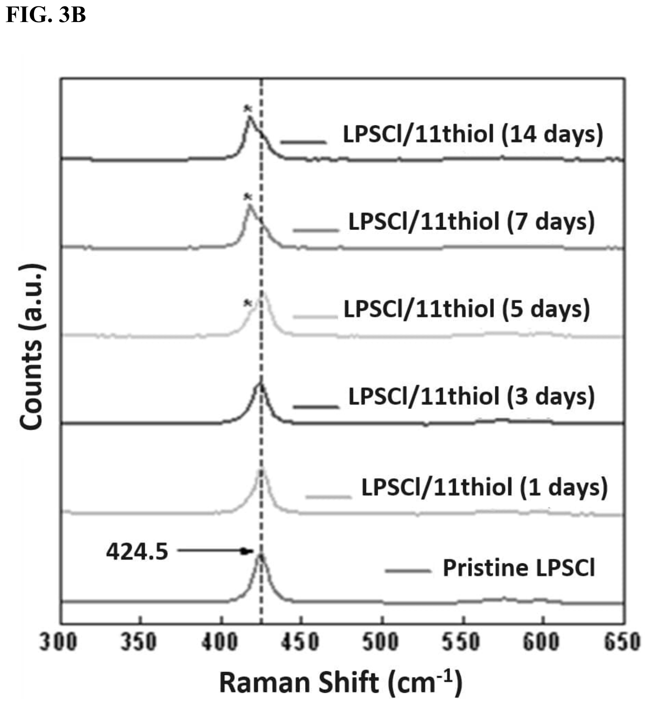

Raman Spectroscopy was used for structural evaluation upon air exposure by monitoring the change of the peak at 424.5 cm-1 (FIG. 3B). This peak has shifted to lower wavenumbers as the material degrades. The samples that are exposed up to 3 days did not have any shift in the main peak. These results are consistent with the XRD results illustrating that there is no change in the bulk structure up to that point. The peak at 424.5 cm-1 corresponds to the PS43- bond which is the key structural component that is responsible for the excellent ionic conduction of these sulfide solid electrolyte materials. The shift of this bond is attributed to the formation of oxythiophosphate species although the exact speciation requires further research.

### (6) XPS Characterization

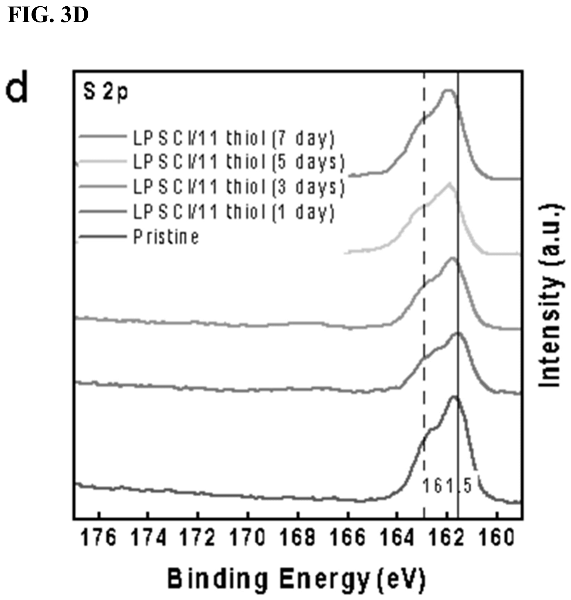

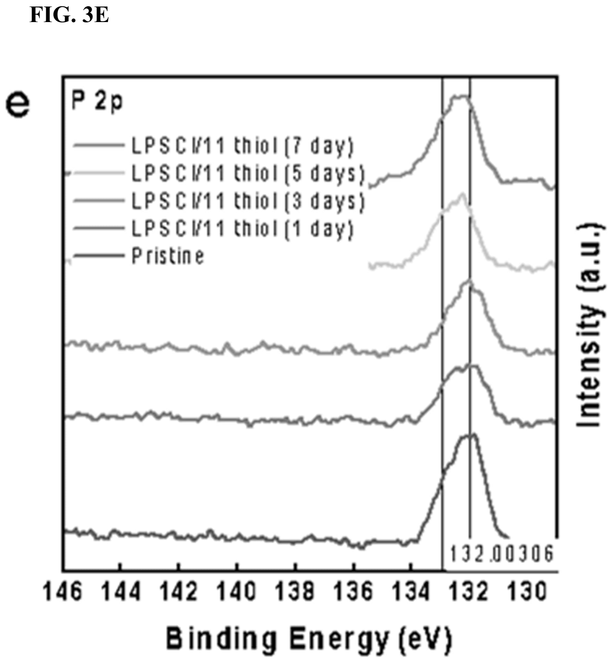

X-ray photoelectron spectroscopy (XPS) was also used to observe the evolution of the oxidation state or bonds after exposing the samples in air. The main peaks of interests are the S 2p and P 2p as it contains the main characteristic bonds for LPSC (FIGs. 3d and 3e). Pristine LPSC exhibits an S 2p signal at 161.5 eV and a P 2p signal at 132.0 eV. 160.3 eV. is where the Li₂S peak should be located which starts appearing after 5 days of air exposure, which indicates that LPSC has undergone hydrolysis and started decomposing. In the meantime, the P 2p peak appearing around 133 eV is consistent with the formation of POxSy oxysulfides. However, since the various oxysulfide species all generally appear in that region, it is not possible to identify exactly what species they are. However, the signal 133.6 eV can be a sign that Li3PO4 species have formed as well.

### (7) Electrochemical Characterization

The samples were characterized using Electrochemical Impedance Spectroscopy (EIS). All materials were cold pressed into dense pellets under 6 tons for the measurement of ionic conductivity. The pellets were 13 mm in diameter and 470 um for 100 mg pellets and 1200 um for 260 mg pellets. The pellets were prepared by pressing the powder with titanium rods in a PEEK Swagelok die. The titanium served as blocking electrodes. The impedance measurements were conducted in the frequency range of 1 MHz to 100 MHz with an amplitude of 5 mV using a frequency response analyzer (CH Instruments workstation).

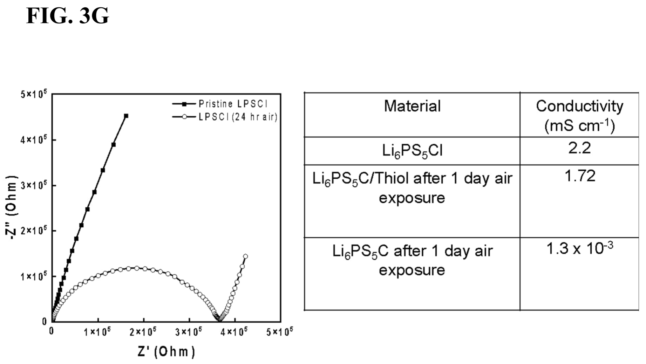

For reference, a conductivity test control experiment was conducted with pristine LPSC without any treatment (FIG. 3G). For non-treated LPSC, after 1 day air exposure the material no longer maintains its ionic conductivity.

### (8) Cell fabrication and cyclability measurements

To evaluate the electrochemical performances of the above-mentioned sulfide SSEs samples, all-solid-state batteries (ASSB) with a diameter of 13 mm, composed of polyaryletheretherketone (PEEK) mold and Ti rods were assembled. The symmetric cells were fabricated with 100 µm Li metal as both electrodes. LPSC, 1 day air exposed 1-undecanethiol /LPSC (1200 µm) were used as the electrolyte. The full cells were fabricated with NCM811 (LG Energy Solution)- LPSC -VGCF cathode composite in the weight ratio of 66:31:3, respectively with loading of 3 mg/cm². LiIn alloy was used as the anode. A layer of pristine LPSC (450 µm) electrolyte was placed between cathode and 1-undecanethiol coated air exposed LPSC. Cell measurements were made on a LAND multichannel battery testing system. The galvanostatic charge-discharge tests of symmetric cells were carried out at 0.1mA/cm² under room temperature (20-25°C) with each step lasting 1 hr. The galvanostatic charge-discharge tests of full cells were conducted within the voltage range of 1.9 to 3.65 V at a rate of 0.05 C for 1^{st} cycle, 0.1C for following cycles under 60°C.

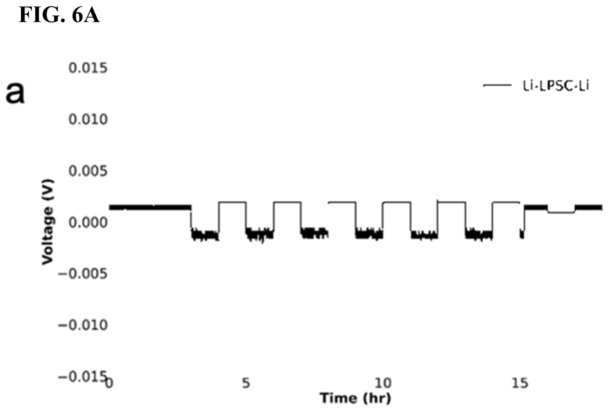

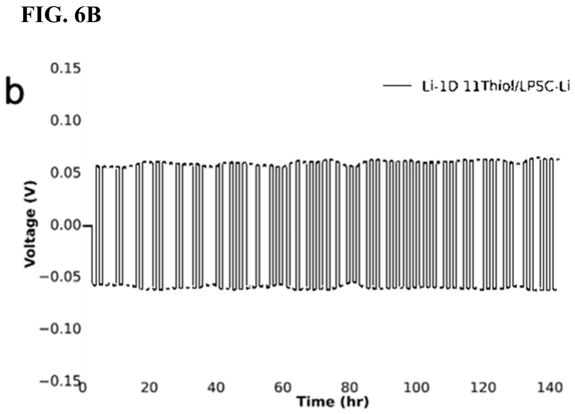

Studies were conducted to examine whether LPSC exposed to air can maintain its function in a solid-state battery. Symmetrical cycling tests show that pristine LPSC (FIG. 6A) cycles under 0.1mA/cm² for 15hrs. 1-undecanethiol coated LPSCl after 1 day air exposure (FIG. 6B) remained stable after longer cycles than pristine. Note the polarization is slightly higher using 1D air exposed 1-undecanethiol/LPSC.

LiNi_{0.8}Co_{0.1}Mn_{0.1}O₂ (NCM811) | LPSCl | LiIn all-solid-state full cells were prepared to study cycling stability. These were assembled with either pristine LPSC or the 1D air exposed 1-undecanethiol /LPSC (FIGs. 6C to 6F). With the 1-undecanethiol coating protection, both cells exhibited similar 2^{nd} cycle charge capacity and 2^{nd} cycle Coulombic efficiency (CE) (FIG. 6C and FIG. 6D). LPSCl full cell remained similar in capacity and cycle retention after 15 cycles with discharge capacity 132.9 mAh/g for LPSC (FIG. 6E) and 133.9 mAh/g for 1D 1-undecanethiol /LPSC (FIG. 6F). This observation proves the remarkable strong protection effect of 1-undecanethiol on LPSC upon air exposure.

It was noted that the conductivity of the 1-undecanethiol coated LPSC is slightly decreased from 2.2 mS cm⁻¹ to 1.73 mS cm⁻¹. This small reduction may be due to the introduction of a nonconductive foreign material, and the negligible impact on ionic conductivity is highly unusual among polar organic solvents.

In summary, the XRD, Raman, and XPS results all indicate that 1-undecanethiol coated LPSC remains protected for up to 3 days of air exposure without compromising the structure and conductivity.

### (9) Chemical Compatibility between SH and LPSC

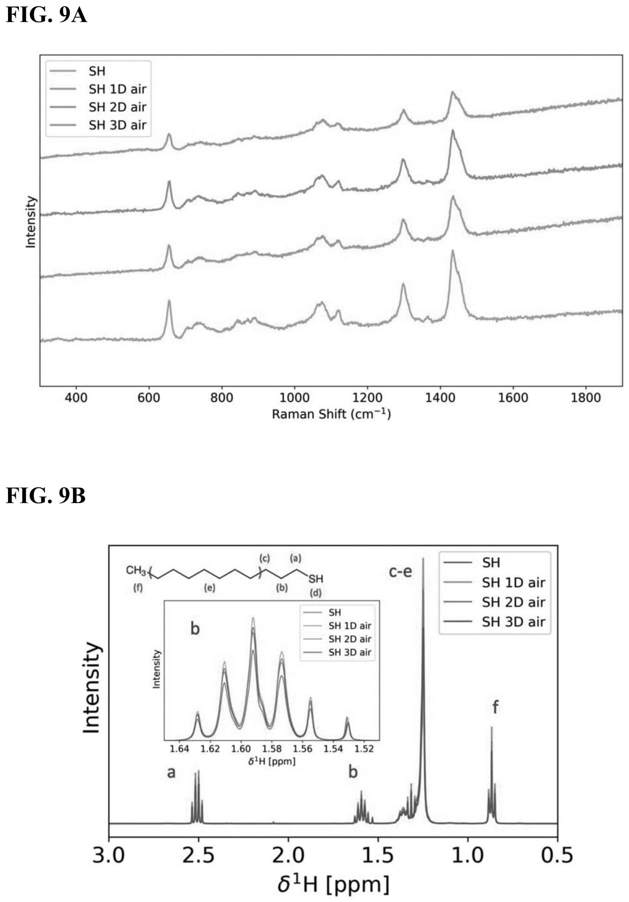

To gain insights into the SH water repelling ability upon prolonged air exposure, the interaction of the 1-undecanethiol (SH) with water without LPSC was studied. FIG. 9A shows the 300-1900 cm⁻¹ region of Raman spectra recorded on an SH solution and upon exposure to air with 33% RH for 1, 2, and 3 days, to monitor changes in the C-S stretching frequency. SH maintains the C-S bond peak at 639 cm⁻¹, and there is no evidence for S-S bond formation at 450-495 cm⁻¹, which suggests that SH molecules retain their structural integrity in ambient air. ¹H Nuclear magnetic resonance (NMR) spectra, shown in FIG. 9B, were also collected on the same series of SH samples and exhibit six ¹H resonances that are assigned to the six ¹H local environments present in the SH molecule. With prolonged exposure, ¹H signals exhibit constant isotropic shifts, no appearance of H₂O peaks, and minimal changes in signal intensities. This implies that the SH molecule's structure remains unchanged, and H₂O diffusion within SH is exceptionally slow.

The introduction of a small molecule into the system leads to good retention of the ionic conductivity of the SSE, unlike previously reported polymeric surface modifiers. The protection mechanism is highly effective: the SH@LPSC maintains the ionic conductivity to above 1 mS cm-1 for up to 2 days of exposure (33%RH). Even after 3 days of exposure to 33% RH, SH@LPSC powder maintains its original color and crystallinity, while the control material suffered catastrophic loss of conductivity along with clear discoloration **(****FIG. 1B****).**

### (10) Chemical Interaction between the LPSC and SH

To probe the chemical interaction between the LPSC and the 1-undecanethiol (SH), density functional theory (DFT) calculations were conducted for the adsorption energies of undecane (CH), which does not contain the thiol head group, and SH, which contains the thiol functional group, onto the surface of LPSC. FIG. 10A demonstrates that both organic compounds can adsorb onto the LPSC surface, but SH exhibits a much higher propensity to adsorb onto the surface (-3.82 eV) as compared to CH (-1.172 eV). Furthermore, SH can form S-S bonds with LPSC.

The density functional theory (DFT) calculations were carried out with the VASP code49. Perdew-Burke-Ernzerhof (PBE) functional within generalized gradient approximation (GGA)50 was used to process the exchange-correlation, while the projector augmented-wave pseudopotential (PAW)51 was applied with a kinetic energy cut-off of 500 eV, which was utilized to describe the expansion of the electronic eigenfunctions. The vacuum thickness was set to be 15 Å to minimize interlayer interactions. The Brillouinzone integration was sampled by a Γ-centered 3 × 3 × 1 Monkhorst-Pack k-point. All atomic positions were fully relaxed until energy and force reached a tolerance of 1 × 10-5 eV and 0.03 eV/Å, respectively. The dispersion corrected DFT-D method was employed to consider the long-range interactions.

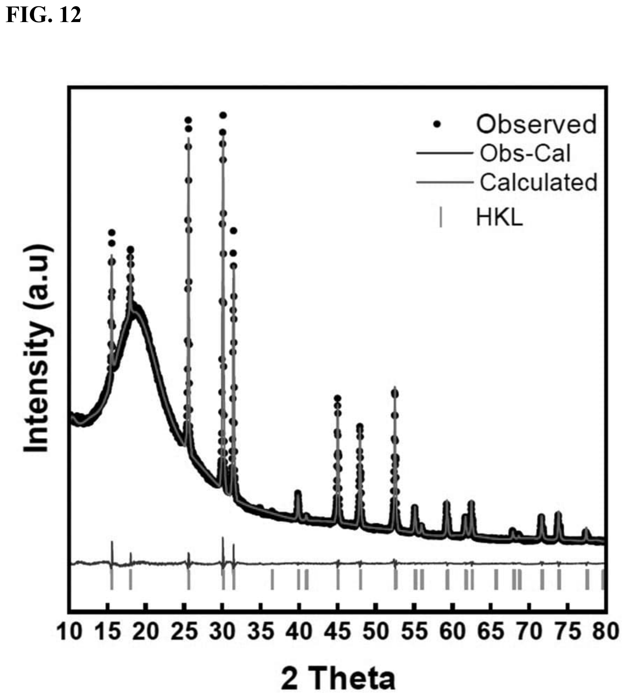

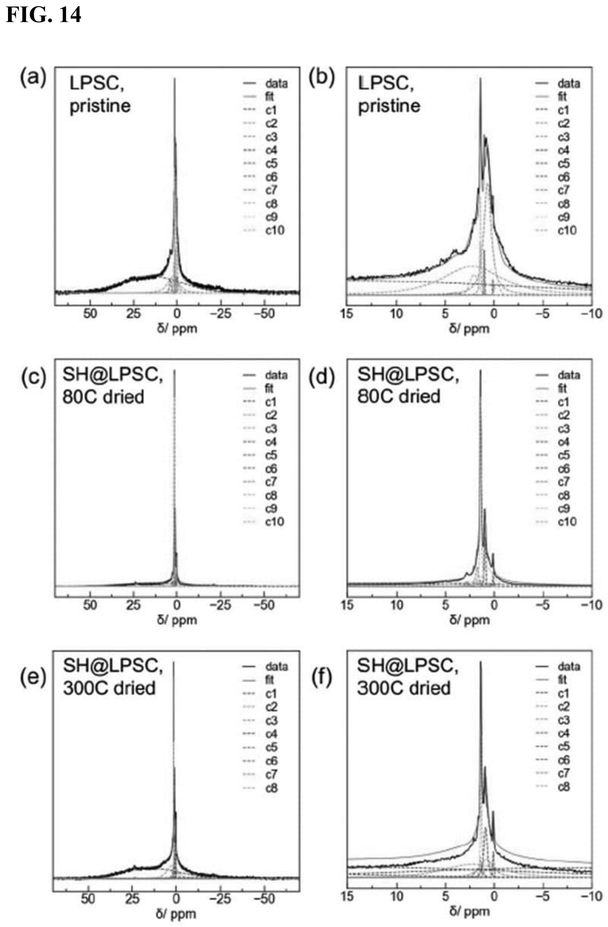

SH modified LPSC (SH@LPSC) was prepared by mixing desired amounts of the materials using a planetary centrifugal mixer (FIG. 11). This mixture was then subjected to vacuum drying at 80°C for 2 hours to remove residual unbonded SH on LPSC surface. The compatibility of SH with LPSC was evaluated by monitoring potential changes in crystal structure and ionic conductivity of SH@LPSC. Rietveld refinement of an XRD pattern obtained on SH@LPSC sample (FIG. 12) indicates that the argyrodite structure remains intact. 1H spin echo NMR spectra, shown in FIG. 10B, were collected on a pure SH solution and on the SH@LPSC sample to investigate the nature of the interactions between SH and the LPSC surface. Six 1H resonances can be resolved in the spectrum obtained on the SH solution, that are assigned to the six 1H local environments, labeled (a-f), in SH molecule. This assignment is based on predicted 1H shifts from the ACD/HNMR Predictor software package, and from the observed integrated signal intensities and expected 1H site multiplicities. In SH@LPSC, all the SH resonances remain visible, but the (a) and (b) resonances are shifted downfield (to more positive ppm frequencies). The (a) and (b) resonances correspond to 1H nuclei bonded to carbons one and two bonds away from the thiol end group, respectively. In NMR, the isotropic shift of a nucleus depends on the degree of shielding from the static magnetic field provided by the local electron cloud and is therefore a sensitive probe of local structure changes. Here, changes in the isotropic shifts of the (a) and (b) resonances suggest that the SH molecules bond to the LPSC surface at the thiol end. The downfield shift of the (a) resonance (0.2 ppm) is greater than that of the (b) resonance (0.08 ppm), in line with the greater change in the electron cloud around the 1H nucleus closest to the thiol end. While the seeming disappearance of the (d) resonance assigned to the thiol group 1H in the SH@LPSC spectrum could provide further evidence for thiol end attachment to the LPSC surface, this signal overlaps with the (c) and (e) resonances, and the presence of residual, free SH molecules in the SH@LPSC sample makes it difficult to correlate changes in (d) signal intensity with attachment chemistry. An upfield shift is observed for the (f) resonance (0.08 ppm) that corresponds to the SH methyl chain end. This slight upfield shift was tentatively attributed to weak Van der Waals interactions between the methyl end of the SH molecules and the LPSC surface. The broad 1H resonance observed between 0.5-1 ppm in the SH@LPSC spectrum in FIG. 10B corresponds to protonated impurities in the LPSC SSE, as confirmed by the 1H spectrum obtained on pure LPSC and shown in FIG. 13. Subjecting the SH@LPSC sample to a vacuum drying procedure at 80°C for 2 hours did not completely remove SH residues, as indicated by the SH signals remaining in the corresponding ¹H NMR spectrum (FIG. 13), with signal integration suggesting about 4-5 wt% of SH in the sample. However, almost all the SH modifiers can be volatilized after an additional heat treatment at 300°C if desired (FIG. 13). Further details on the quantification procedure are in FIG. 13 and representative fits of the corresponding spectra are provided in FIG. 14.

The bonding interaction between SH and LPSC is further investigated using surface-sensitive XPS analysis, with results presented in FIGs. 10c-d. LPSC and SH@LPSC display a P-S bond from PS43- at 161.5 eV in the S 2p spectrum, and at 131.9 eV in the P 2p spectrum40. The Li-S at 160 eV (FIG. 10c) and P-O at 133.5 eV (FIG. 10d) signals on LPSC are from surface decomposition product like Li2S and POxSy during LPSC transfer40. Within SH@LPSC, the increased intensity of the S-H peak at 160 eV, which overlaps with Li-S, alongside the concurrent decrease in the P-O peak at 133.5 eV, suggest the creation of a thin SH film on the LPSC surface. The increased intensity of the S-S peak at 164.5 eV on the SH@LPSC sample (FIG. 10c), can be attributed to bridging sulfur atoms. This provides strong evidence for the establishment of S-S bonds between SH molecules and S atoms at the surface of LPSC. The integrity of the P-S bond at 131.9eV in FIG. 10d indicates the good compatibility of SH and LPSC. These findings corroborate the existence of S-S interaction between SH and LPSC, aligning well with the DFT calculation and NMR results.

Cryo-TEM images of pristine LPSC and SH@LPSC samples reveal the nanoscale distribution of crystalline and amorphous regions, as shown in FIGs. 10 e-f. The presence of an SH modification at the surface of LPSC does not alter its bulk crystal structure, as indicated by the similar lattice spacing measured on SH@LPSC (of 0.182 nm, FIG. 10f), as compared to that measured on pristine LPSC (0.185 nm, FIG. 10e). This observation validates the compatibility of SH with LPSC. An amorphous layer of ~ 3 nm in thickness is present at the surface of the LPSC particle in the SH@LPSC sample, which was attributed to the SH adsorption.

The combined bulk and grain boundary resistance of SH@LPSC exhibits a slight increase from 20 ohm to 22 ohm (FIG. 10g) as compared to pristine LPSC. This modest increase can be attributed to the presence of 4-5 wt% of nonconductive SH residue that remains after the 80°C drying procedure. Li-ion conductivities are 1.8±0.16 mS cm-1 and 1.6±0.03 mS cm-1, respectively, based on the average of 3 independent measurements (errors correspond to one standard deviation). The modest effect of the SH surface modifier on the conductivity of LPSC is highly unusual. For example, when subjecting sulfide SSEs to other polar solvents, such as diethylene glycol dimethyl ether or propylene carbonate, a two order of magnitude decrease in ionic conductivity is typically observed due to nucleophilic attack from electron donor from solvent molecules to the SSE species34. In the case of propylene carbonate, the resulting mixture becomes sticky and exhibits ionic conductivity too low to be measured.

### (11) Effectiveness of Protection Against Moisture

To study the chemical stability of LPSC against hydrolysis, LPSC and SH@LPSC were evaluated after exposure to humid ambient air for 5 hours and up to 3 days. The samples are labeled as "LPSC time air", e.g., LPSC 5H air refers to a sample that has been exposed for 5 hours.

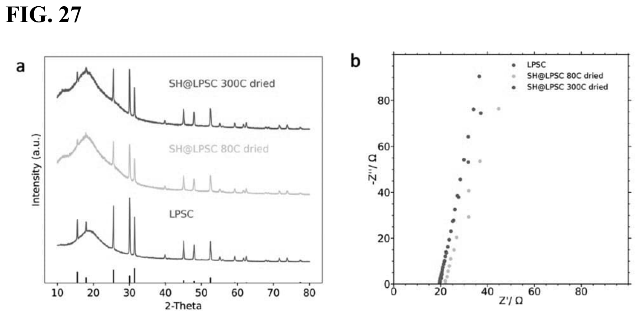

A 12 mL plastic vial with a mixture of 600 mg of LPSC and 120 mg of SH were placed into a 16 oz jar for air exposure with initial humidity 33%RH under room temperature. The exposure times were 5 hours, 1 day, 2 days, and 3 days. A mixture of 600mg LPSC and 600mg of SH (1:1 weight ratio) in the same 12 ml plastic vial was exposed in the fume hood for open environment test with humidity of 40%RH for 10 mins. After air exposure, the samples were taken into the vacuum oven to dry excess solvent and moisture of the surface of the materials at 80 °C for 2 hours with a heating ramp of 1 °C/min. The dried samples were then moved into the glovebox for further tests. Note that the complete removal of all SH residues can be achieved through a 300°C heating process where the crystal structure and conductivity are consistent with the pristine LPSC (FIG. 27). However, the 80oC drying step was sufficient to remove most of the SH without detrimental effect on conductivity and stability with Li.

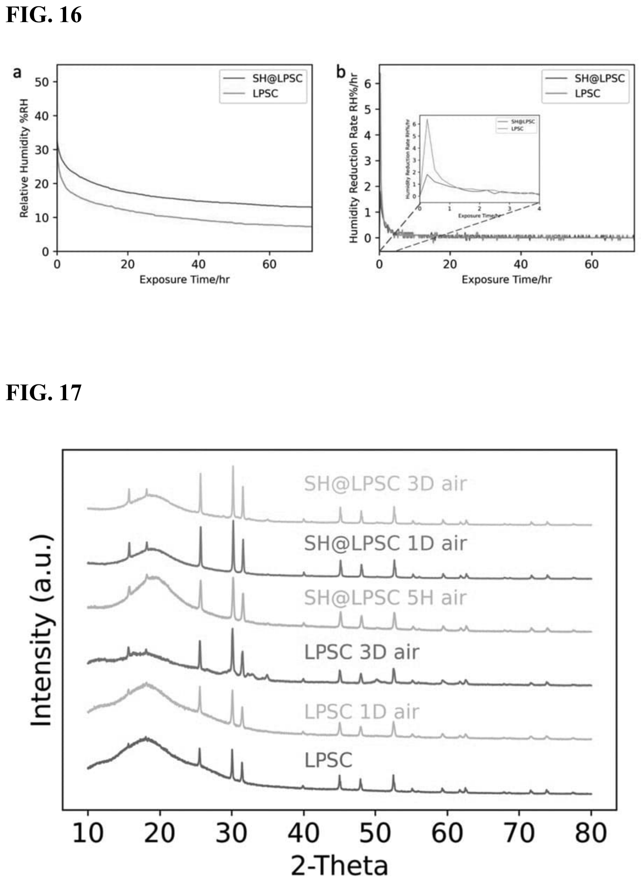

To evaluate the air stability of various LPSC samples in a quantitative manner and under specific humidity conditions, a home-built system was employed as illustrated in FIG. 15a. A humidifier was used ensuring a consistent initial humidity of 33% RH. 600mg LPSC or a mixture of 600mg LPSC and 120mg SH, unless otherwise noted, was placed inside the 16 oz airtight container. A thermo-hygrometer was positioned near the sample to monitor changes in atmospheric humidity levels over time. FIG. 16a shows the evolution of the relative humidity (RH) in the container as a function of exposure time (t). Since this is a closed environment, consumption of water through reaction with LPSC leads to a reduction in relative humidity. After 72 hours (3 days) of exposure, the relative humidity inside the LPSC container decreases from 33% to 7%. In contrast, the relative humidity within the SH@LPSC container decreases from 33% to 13%. The first derivative of the relative humidity with respect to time provides an estimate of the rate of water uptake by the LPSC. The results, shown in FIG. 16b, reveal a significantly reduced rate of water uptake for SH@LPSC, further confirming the effectiveness of the SH surface modifier at mitigating moisture reactivity. The above air exposed samples were subjected to a vacuum drying procedure at 80°C for 2 hours prior to following characterizations.

The XRD patterns in FIG. 15b indicate that, following 1 day of exposure time in 33% RH air, no new phases are formed in the SH@LPSC sample, while new peaks at 25° and 35° with very low intensities start to appear after 3 days of exposure. The basic structure of LPSC remains unaltered, suggesting the effective role of SH as a protective agent. On the contrary, the XRD pattern of LPSC after being exposed for 3 days in 33% RH air exhibits major Li2S and LiCl decomposition phases, indicated by the peaks at 25° and 35°. The complete XRD dataset is provided in FIG. 17.

Raman spectroscopy was used to monitor the evolution of the bulk LPSC structure upon humid air exposure. Here, changes in the peak at 424.5 cm⁻¹ were monitored ( FIG. 15c), corresponding to PS₄³⁻ units, a key structural component that is responsible for the excellent ionic conduction of sulfide SSEs. The peak shifts to lower wavenumbers as the material degrades, which is attributed to the decomposition of P-S bonds into P-O bonds, potentially forming oxy-thiophosphate species, although the exact speciation requires further investigation. The spectrum obtained on the SH@LPSC 1D air sample exhibits no change in the 424.5 cm⁻¹ peak, while the SH@LPSC 3D air sample shows a very small shift of the same peak when 16.2% of PS₄³⁻ unit is degraded. In contrast, the LPSC 1D air sample exhibits a substantial peak shift and signifies 41.8% degradation of PS₄³⁻ unit. These results agree with the XRD findings indicating that the bulk structure only starts to degrade at about 3 days of humid air exposure for the SH@LPSC SSE.

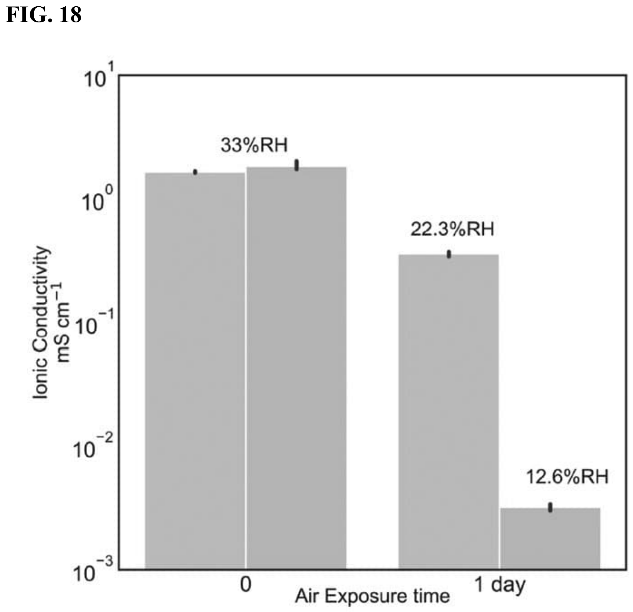

The ionic conductivity of electrolyte pellets prepared by cold pressing is plotted in FIG. 15d-e. When SH absorbent is applied, the SH@LPSC ionic conductivity slightly decreases from 1.8±0.16 mS cm⁻¹ to 1.6±0.03 mS cm⁻¹, based on the average of 3 independent measurements, as shown in FIG. 15d-e. This slight decrease can be attributed to the introduction of a poorly ionically conducting component into the system. SH@LPSC exhibits excellent stability after 5 hours, 1 day, and 2 days of air exposure, based on the very small change of its ionic conductivity from 1.1 mS cm⁻¹ to 1.0 mS cm⁻¹ over that time ( FIG. 15e). In contrast, LPSC without the SH coating experiences a significant drop in ionic conductivity to 0.15 mS cm⁻¹ after 5 hours of air exposure (FIG. 3E). The change in ionic conductivity of LPSC during exposure is a function of both humidity and time. When the amount of LPSC in the closed container is reduced from 600 mg (FIG. 15e) to 200 mg (FIG. 18), thereby increasing the H₂O to LPSC ratio, the relative effectiveness of the SH protection becomes significantly more pronounced. SH@LPSC exhibits an ionic conductivity of 0.4 mS cm⁻¹ that is two orders of magnitude higher than LPSC (0.003 mS cm⁻¹) after 1 day of air exposure. An experiment was conducted whereby LPSC and SH@LPSC (LPSC:SH=1:1 weight ratio) were exposed to air in a chemical fume hood under 40% RH. Due to the combined effects of a complex air flow pattern in the fume hood, and possible loss of SH, the experimental conditions cannot be controlled to the same extent as in the closed system used in the rest of this study, where the evolution of the samples could more easily be quantified. Nevertheless, a two orders of magnitude improvement in ionic conductivity retention is again observed when SH@LPSC and LPSC exhibit conductivities of 0.5 mS cm⁻¹ and 0.003 mS cm⁻¹ respectively ( FIG. 15d). To put the results in context, FIG. 15f-g summarizes previously reported stability data collected on modified LPSC electrolytes after air/moisture exposure25,33,41-45. SH protection extends the LPSC protection time from minutes to days (FIG. 15f). The conductivity loss rate is in general ~ 100 x lower (FIG. 15g). This approach enables sulfide SSE processing under standard atmospheric conditions with no additional humidity controls, dramatically driving down manufacturing costs. Also, stability in a standard dry room with a dew point of -40 °C is fully expected.

### (12) Surface Protection Mechanisms

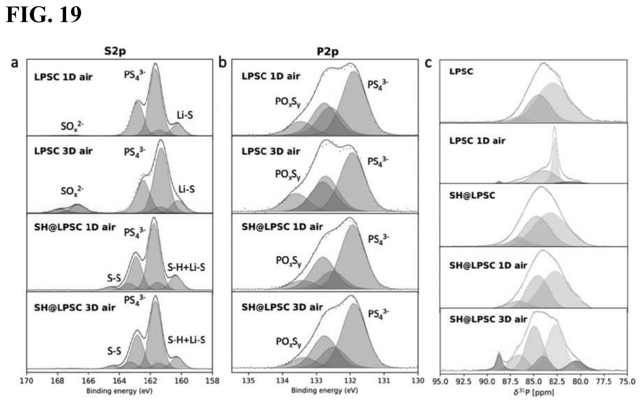

The progression of materials changes following exposure to air (33%RH) was monitored using XPS and solid-state NMR (ssNMR), with results shown in FIG. 19. Upon examining the LPSC 1D air and LPSC 3D air samples, S-O peaks from SOx2- at 167 eV appear ( FIG. 19a) and the intensity of the P-O peak from oxysulfides (POxSy) increases at 132.5 eV ( FIG.19b), indicating that hydrolysis has occurred, causing S2- oxidation. Conversely, S-O peak is absent from SH@LPSC 1D air and SH@LPSC 3D air samples (FIG. 19a), and the intensity of P-O peaks remains unchanged (FIG. 19b) when compared to the SH@LPSC (FIG. 10d). The S-S bond intensities in SH@LPSC 1D and SH@LPSC 3D are almost identical with SH@LPSC. The bonding between SH and LPSC was protecting the surface from oxidation, while the hydrolysis reaction is significantly reduced so that the critical PS 3-units are effectively preserved.

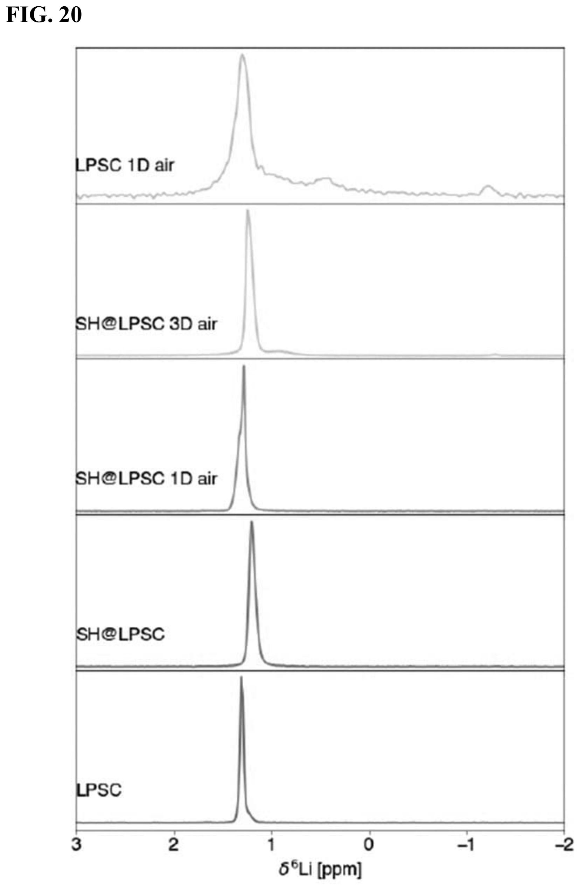

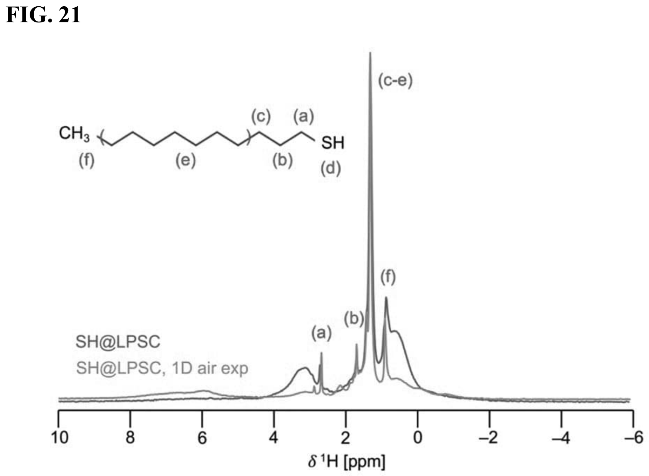

LPSC and SH@ LPSC samples were also investigated with ³¹P and 6Li ssNMR before and after humid ambient air exposure, with results shown in FIG. 19c and FIG. 20, respectively. Because ssNMR is element-specific, and sensitive to both crystalline and amorphous phases, it can selectively probe ³¹P and ⁶Li nuclei within the LPSC electrolyte. No clear differences are observed between the ³¹P spectra obtained on the LPSC and SH@ LPSC samples, signifying that the LPSC bulk structure is unchanged upon mixing with SH. The ³¹P ssNMR spectrum collected on the SH@LPSC 1D air sample is nearly identical to that obtained on LPSC, indicating that the coating protects the LPSC structure from degradation. Even after 3 days in air, most of the ³¹P spectral features attributed to pristine LPSC are retained in the SH@LPSC sample. Nevertheless, the onset of degradation is suggested by the appearance of new resonances at 82.9 and 88.7 ppm, as well as a third resonance at 86.8 ppm assigned to isolated PS43- tetrahedra in *β*-Li₃PS⁴⁻like environments. Without any protection, air exposure leads to significant degradation of the LPSC bulk structure, reflected by the loss of the broad pristine LPSC resonance and the appearance of sharp resonances at 82.9 and 88.7 ppm, assigned to POS33- tetrahedral units and isolated PS₄³⁻ tetrahedra in Li3PS4-like environments, respectively40,47. Interestingly, air exposure of the SH@LPSC samples appears to lead to the formation of more Li₃PS⁴⁻like isolated PS₄³⁻ tetrahedra, as evidenced by the greater intensity of the resonances at 86.8 ppm and 88.7 ppm in the spectrum collected on the SH@LPSC 3D air sample relative to that obtained on the LPSC 3D air sample. Overall, ³¹P and ⁶Li ssNMR results clearly demonstrate that the SH modifying delays the onset of degradation and largely preserves the LPSC structure after up to 3 days of exposure to ambient air. Finally, ¹H spectra collected on SH@LPSC and SH@LPSC 1D air samples (FIG. 21) suggest that the amount of SH adsorbed onto the LPSC surface decreases with air exposure time (presumably due to evaporation), as indicated by a decrease in the broad peak near (a) (~3.5 ppm) decreases, which could partly explain the reduced efficiency of the SH coating with increasing exposure time.

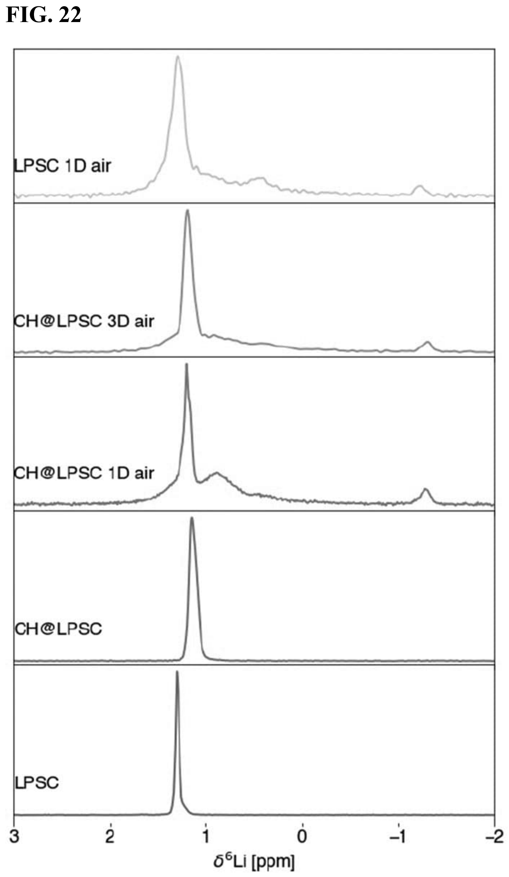

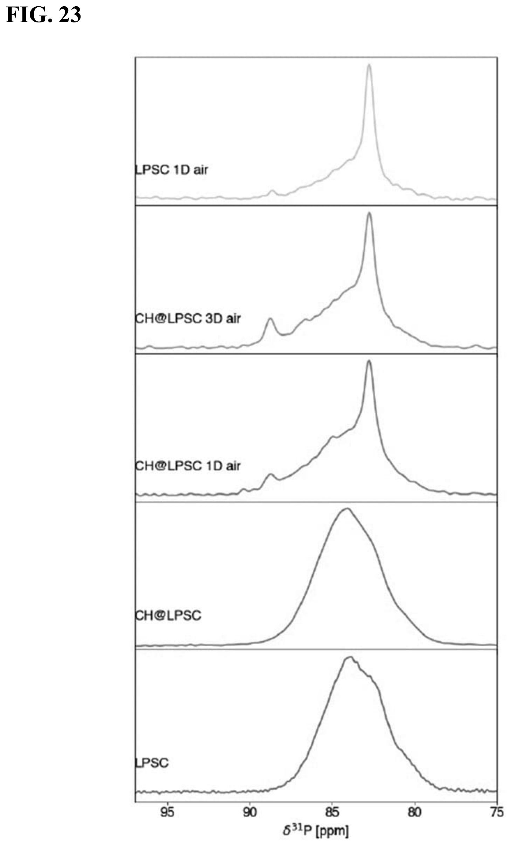

⁶Li and ³¹P spectra were also collected on a series of samples modified with CH instead of SH both before and after exposure to 33%RH air for one or two days. These samples are labeled as CH@LPSC, CH@LPSC 1D air and CH@LPSC 3D air. The results, shown in FIGs. 22-23, highlight the critical role that the thiol chain end of SH plays in the protection mechanism for LPSC. Coating with CH (with a methyl rather than a thiol end group) does not protect the LPSC SSE against hydrolysis, and significant changes are observed in the ⁶Li and ³¹P resonances of the CH@LPSC 1D air sample.

The confirmed air stability of SH, and its ability to form S-S bonds with the LPSC surface, make it a powerful, hydrophobic protecting agent. Specifically, SH forms a strong, impermeable layer that prevents water from reaching the LPSC surface. This protective layer prevents LPSC from reacting with ambient moisture for up to several days. The slow degradation of SH@LPSC upon extended air exposure likely involves water penetration through defects that bypass the SH protective layer, or through SH evaporation that leaves unbonded LPSC surface exposed.

### (13) Enhanced Electrochemical Performance

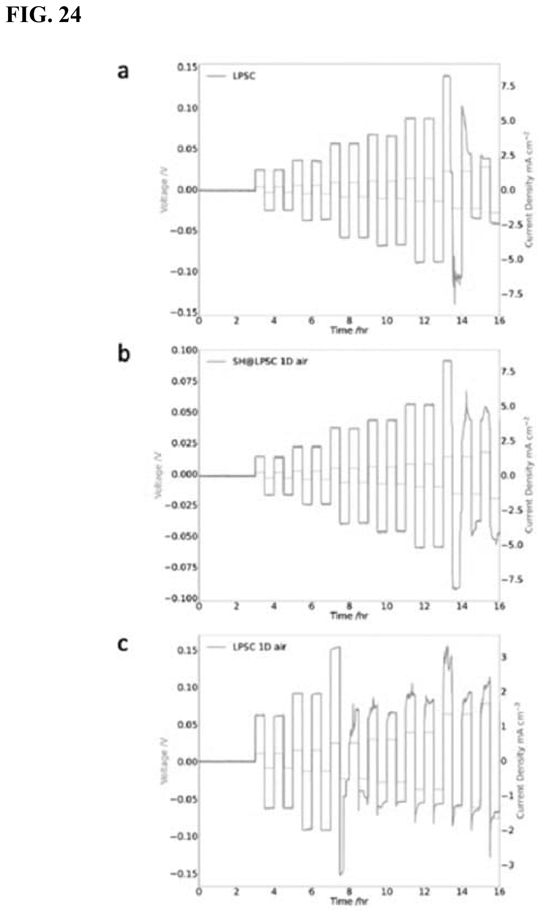

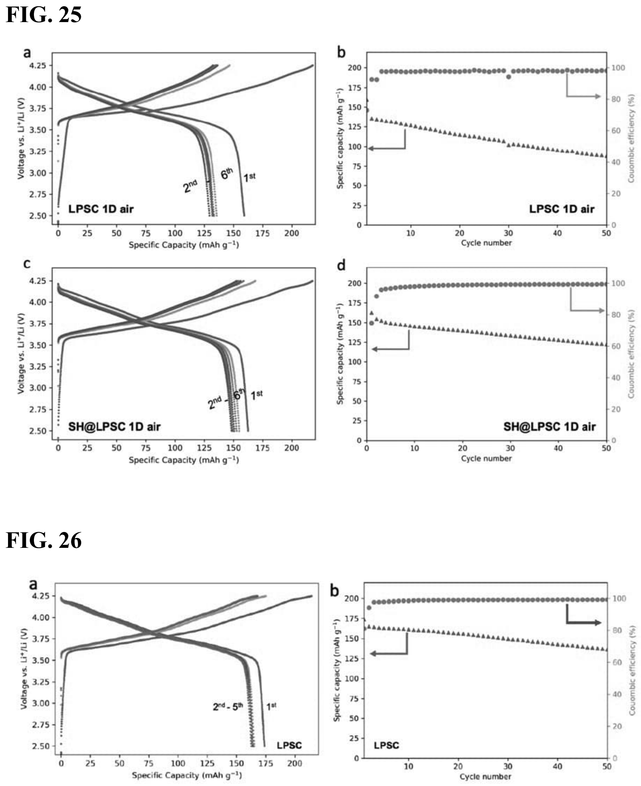

LPSC and SH@LPSC SSEs were exposed to air for 1 day to study their electrochemical stabilities in Li symmetric and full cells. Li/Li symmetric cells are commonly used to evaluate the interfacial stability of SSEs with lithium metal. Critical current density (CCD) is a metric to measure how well the SSE resists shorting due to lithium dendrite growth. FIG. 24 shows that the CCD value of SH@LPSC 1D air remains unchanged compared to pristine LPSC, with a value of 0.6 mA cm⁻², while the CCD value of LPSC 1D air decreases from 0.6 to 0.3 mA cm⁻² at room temperature. Thus, in SH@LPSC 1D air, the surface modification along with the air exposure do not appear to change the interactions between LPSC and Li. Furthermore, FIG. 25 illustrates the galvanostatic cycling performance of Li_{0.5}In/LiNi_{0.8}Co_{0.1}Mn_{0.1}O₂ with a capacity loading of 1.5 mAh cm⁻². As compared to a base line cell using a pristine LPSC electrolyte ( FIG. 26), the cell fabricated with LPSC after 1 day of air exposure ( FIG. 25 (a-b)) exhibits ~80mV decrease in cell voltage as well as a lower discharge capacity of 135 mAh g-1 due to the increased electrolyte resistance after the formation cycle. In contrast, the cell fabricated with SH@LPSC after 1 day of air exposure (FIG. 25 (c-d)) demonstrates similar capacity of 155 mAh g⁻¹ and 80% capacity retention even after 50 cycles as the pristine LPSC full cell ( FIG. 26). This observation serves as strong evidence of the remarkable protective effect of SH on LPSC, particularly in mitigating the adverse effects of moisture exposure.

These experiments show that a long chain thiol, 1-undecanethiol, can be used to effectively protect the Li6PS5Cl solid electrolyte from humid air exposure. 1-undecanethiol is found to be chemically compatible with Li6PS5Cl, with negligible impact on its conductivity, and can be mostly removed with a vacuum drying process. Structural analysis shows that the -SH end group forms S-S bonds with S atoms at the surface of the solid electrolyte without disrupting the P-S network, which is essential for ion conductivity. The hydrocarbon tail of the thiol forms a hydrophobic layer that effectively repels water. The novel SH surface modification is found to be both effective at maintaining the bulk structure and ionic conductivity of Li6PS5Cl, even upon extended exposure to humid air. The SH-modified solid electrolyte maintains an ionic conductivity > 1 mS cm-1 for 2 days when exposed to air with a relative humidity of 33%. These exceptional outcomes constitute a substantial advancement in terms of moisture protection time, outperforming prior work in this area by two orders of magnitude. With the 1-undecanethiol protection, the electrolyte shows comparable performance in solid state batteries even after 1 day of air exposure. The results demonstrate the potential of 1-undecanethiol surface modification for preserving the extremely air-sensitive sulfide solid electrolytes outside of a glovebox or in a dry room, and paves the way for more practical, efficient, and scalable sulfide solid state battery production processes.

### Materials Characterization

Raman spectroscopy (Renishaw^{™} inVia^{™}) measurements were taken from the range 300 ~ 2500 cm⁻¹ at an excitation wavelength of 785 nm. All powders were hand ground and prepared in a glovebox covered with Kapton tape to prevent air exposure during the measurements. Liquid SH samples before and after air exposure were analyzed via ¹H NMR spectroscopy. To prepare the sample, 100 µl of SH or air exposed SH specimen was mixed with 1000 µl of chloroform D (99%, Sigma Aldrich), and then transferred to an NMR sample tube. ¹H NMR is performed with a 500 MHz spectrometer (ECA500, JEOL). Powder XRD (D8 DISCOVERY, Bruker) was measured from 10° - 80 ° at a scan rate of 2° / min. The sample was sealed using a Kapton tape. In the cryo-TEM imaging, the specimens were placed onto a copper grid and affixed to a dual-tilt cryo-TEM transfer holder within a liquid nitrogen environment. Cryo-TEM images were captured utilizing a JEM-2100F electron microscope operating at an acceleration voltage of 200 kV. XPS analyses were conducted using an AXIS Supra XPS instrument by Kratos Analytical. The XPS data was acquired utilizing a monochromatized Al Ka source emitting at 1,486.7 eV with samples under an ultra-high vacuum environment of 10-8 Torr. The samples were transferred from a nitrogen-filled glovebox to avoid further air exposure. Prior to analysis, a 10 keV Ar (1000 atom) cluster source was applied for a duration of 60 seconds for surface cleaning. All XPS spectra were calibrated with the adventitious C 1s peak at 284.6 eV and subsequently analyzed using the CasaXPS software. For solid state NMR, all spectra were acquired at 18.8 T (800 MHz for 1H) on a Bruker Ultrashield Plus standard bore magnet equipped with an Avance III console. 1H and ³¹P solid-state NMR spectra were obtained using a 1.3mm HX MAS probe with zirconia rotors sealed with Vespel caps under Ar at a spinning speed of 60kHz. A flow of N2 gas (2000 l/hr) was used to control the rotor temperature and protect the sample from moisture contamination. Data were obtained using a rotor synchronized spin-echo pulse sequence (90°-TR-180°-TR-477 ACQ). For ¹H, 90° and 180° flip angles of 1.6 µs and 3.2 µs, respectively, at 75 W were used. For ³¹P, 90° and 180° flip angles of 1.5 µs and 3.0 µs, respectively, at 75 W were used. ¹H solution-state spectra were obtained for liquid undecane and 1-undecanethiol using a BBO 800MHz S4 5mm probe. Data were obtained using a direct excitation, single pulse sequence with a 30° flip angle of 4.8us at 21W. 1H chemical shifts were referenced indirectly with adamantane to the ¹H signal of tetrakis(trimethylsilyl)silane at 0.247 ppm. ³¹P chemical shifts were referenced to the ³¹P signal of 85% H₃PO₄ at 0 ppm. ⁶Li solid-state NMR spectra were obtained using a 3.2mm HXY MAS probe with zirconia rotors sealed under Ar with Vespel caps at a spinning speed of 20 kHz. For the rotor synchronized spin-echo pulse sequence, 90° and 180° flip angles of 8.0 µs and 16.0 µs, respectively, at 200 W were used. ⁶Li chemical shifts were referenced to 1M LiCl at 0 ppm. Spectra destined for ¹H quantification in the SH@LPSC samples were obtained using a 2.5mm HX MAS probe with zirconia rotors sealed with Vespel caps under Ar at a spinning speed of 20kHz. A larger rotor size was used in order to maximize sample content and ¹H signal for quantification. The rotor synchronized spin-echo pulse sequence used 90° and 180° flip angles of 2.66 µs and 5.32 µs, respectively, at 100 W. T2* measurements on each sample were conducted to compensate for uneven signal decay during the 50 µs echo delay. On each sample, a series of rotor synchronized spin-echos (90°-TR-180°-TR-ACQ) with variable echo delays was acquired and the spectra were fitted using an in-house package to obtain a T2* value. To ensure accurate ¹H quantification, a spectrum and T2*measurement was also obtained on an empty rotor. Thereafter, the same measurements were repeated on a known mass of adamantane and signal contributions from the empty rotor were subtracted to calibrate ¹H content to an integrated spectral intensity. Identical measurements were conducted on a pristine LPSC sample, and two SH@LPSC samples dried at 80 °C and 300 °C, respectively. For each sample, the proton content was calculated accounting for T2* signal decay of each fitted component and contributions from the empty rotor. In the dried SH@LPSC samples, the proton content of pristine LPSC was subtracted to calculate the 1-undecanethiol content of the sample.

### Battery Assembly

To evaluate the electrochemical performance, ASSBs Swagelok cell composed of a polyaryletheretherketone (PEEK) mold and Ti rods were assembled. In the symmetric cells, a pressure of 375 MPa was applied to compact 200 mg of solid electrolyte powder into a pellet with a diameter of 13 mm. Lithium metal foil, with a diameter of 1.11 cm and a thickness of 100 µm, was attached to both sides of the electrolyte pellet. Subsequently, the resulting Li/SSE/Li symmetric cell was sandwiched between two Ti rods. In full cells, the cathode composite was made by mixing NCM811 (LiNi_{0.8}Co_{0.1}Mn_{0.1}O₂, LG Energy Solution) - LPSC (Ampcera Inc, used as received) - vapor grown carbon fiber (Sigma Aldrich) in the weight ratio of 60:37:3 in a mortar and pestle. 100mg of pristine LPSC and 100mg of air exposed SSEs (specimens in FIG. 15f) were pressed at 30 MPa to form a dual-layered electrolyte pellet. Following this, a cathode composite weighing 16.2 mg was introduced onto the pristine LPSC side and pressed at 375 MPa. The Li0.5In alloy, with a diameter of 1.11 cm was attached to the side of air exposed SSE and pressed at 125 MPa. Subsequently, the resulting Li_{0.5}In/air exposed SSE/LPSC/cathode cell was sandwiched between two Ti rods. Symmetric and full cells were kept at 30MPa and 55MPa during testing, respectively. All cells were assembled in an argon atmosphere glovebox.

### Electrochemical Testing

Cell measurements were made on a LAND multi-channel battery testing system. The galvanostatic charge-discharge tests of symmetric cells was carried out at stepwise increasing current densities under room temperature with 0.5 hour per half cycle. The galvanostatic charge-discharge tests of full cells were conducted within the voltage range of 1.9-3.65 V at a rate of 0.1C under 60°C. The impedance measurements were conducted in the frequency range of 7 MHz to 100 mHz with an amplitude of 5 mV using a frequency response analyzer (CH Instruments workstation) under room temperature. The impedance measurements setup involved the use of 100 mg of electrolyte pressed and kept at 375 MPa with diameter of 13mm under room temperature, while the Ti rods served as blocking electrodes.

It will be understood by those of ordinary skill in the art that aspects of the present disclosure can be performed within a wide equivalent range of parameters without affecting the scope of the disclosure described herein. All publications, patent applications and patents disclosed herein are incorporated by reference in their entirety.

## Claims

1. A solid electrolyte composition comprising:
a sulfide-containing solid electrolyte material, having a surface; and
an organic coating, wherein the organic coating is formed on the surface of the sulfide-containing solid state electrolyte material, and
wherein the coating is formed from at least one compound of Chemical Formula 1 or Chemical Formula 2:
R-A Chemical Formula (1)
R-A'-R Chemical Formula (2)
wherein:
A is a SH group, an isocyanate, an amine, or a leaving group;
A' is a -S- moiety or a -S-S- moiety; and
each R is independently a substituted or unsubstituted C3-C20 alkyl group.

2. The solid electrolyte composition according to claim 1, wherein the compound of Chemical Formula 1 or Chemical Formula 2 is attached to the surface of the sulfide-containing solid state electrolyte material by chemisorption, van der Waals interaction, or ionic interaction.

3. The solid electrolyte composition according to claim 1, wherein the compound of Chemical Formula 1 or Chemical Formula 2 reacts with the sulfide-containing solid state electrolyte material to form a covalent bond.

4. The solid electrolyte composition according to claim 1, wherein in the compound of Chemical Formula 1, A is the SH group.

5. The solid electrolyte composition according to claim 1, wherein in the compound of Chemical Formula 1, A is a leaving group selected from a triethoxysilyl or a trimethoxysilyl.

6. The solid electrolyte composition according to claim 1, wherein in the compound of Chemical Formula 1 or Chemical Formula 2, at least one of R is a C6-C16 alkyl group.

7. The solid electrolyte composition according to claim 1, wherein in the compound of Chemical Formula 1 or Chemical Formula 2, at least one of R is a C8-C12 alkyl group.

8. The solid electrolyte composition according to claim 1, wherein the compound of Chemical Formula 1 or Chemical Formula 2 has a total of 6 to 16 carbons.

9. The solid electrolyte composition according to claim 1, wherein in the compound of Chemical Formula 1 or Chemical Formula 2 has a total of 8 to 12 carbons.

10. The solid electrolyte composition according to claim 1, wherein in the compound of Chemical Formula 1 or Chemical Formula 2, at least one of R is a substituted C3-C20 alkyl group, wherein there are one or more substituents selected from fluorine, chlorine, bromine, ester or ketone moieties.

11. The solid electrolyte composition according to claim 1, wherein the compound of Chemical Formula 1 is 1-undecanethiol.

12. The solid electrolyte composition according to claim 1, wherein the sulfide-containing solid electrolyte material is selected from the group consisting of an inorganicbased electrolyte material and an organic-based electrolyte material.

13. The solid electrolyte composition according to claim 1, wherein the sulfide-containing solid electrolyte material is an inorganic electrolyte.

14. The solid electrolyte composition according to claim 1, wherein the sulfide-containing solid electrolyte comprises at least one selected from Li₃P₇S₁₁, Li₁₀GeP₂S₁₂, and Na₃PS₄ and/or Li₆PS₅Cl.

15. The solid electrolyte composition according to claim 1, wherein the sulfide-containing solid electrolyte comprises at least one selected from LPS-based glass or glass ceramic of formula *x*Li₂S.yP₂S₅, wherein x+y=1.

16. The solid electrolyte composition according to claim 1, wherein the sulfide-containing solid electrolyte comprises an argyrodite-based solid electrolyte of formula Li₆PS₅X, wherein X is Cl, Br, or I.

17. The solid electrolyte composition according to claim 1, wherein the sulfide-containing solid electrolyte comprises an argyrodite-based solid electrolyte of formula Li_{6-y}PS_{5-y}Cl_{1+y}, where y is <1.

18. A method for making the solid electrolyte composition according to claim 1, comprising:
providing a sulfide-containing solid electrolyte material,
combining the solid electrolyte with at least one compound of Chemical Formula 1 or Chemical Formula 2 to form a coated sulfide-containing solid electrolyte material:
R-A Chemical Formula (1)
R-A'-R Chemical Formula (2)
wherein:
A is a SH group, an isocyanate, an amine, or a leaving group;
A' is a -S- moiety or a -S-S- moiety; and
each R is independently a substituted or unsubstituted C3-C20 alkyl group, and
using the coated sulfide-containing solid electrolyte material to form a solid electrolyte.

19. A method for making a solid electrolyte, comprising:
providing a sulfide-containing solid electrolyte, and
combining the solid electrolyte with at least one compound of Chemical Formula 1 or Chemical Formula 2 to form a coated sulfide-containing solid electrolyte material:
R-A Chemical Formula (1)
R-A'-R Chemical Formula (2)
wherein:
A is a SH group, an isocyanate, an amine, or a leaving group;
A' is a -S-; and
each R is independently a substituted or unsubstituted C3-C20 alkyl group.

20. A solid electrolyte comprising the solid electrolyte composition according to claim 1.

21. An all solid state battery comprising:
a negative electrode,
a positive electrode; and
the solid electrolyte according to claim 20, wherein the solid electrolyte is interposed between the negative electrode and the positive electrode.
